# EUROPEAN PATENT SPECIFICATION

(11) **EP 2 271 499 B1**
(45) Date of publication and mention of the grant of the patent: **10.12.2014**
(21) Application number: 09742663.9
(22) Date of filing: 14.04.2009
(51) Int. Cl.: B41J 2/175, B41J 2/01, B41J 2/21, B41J 2/165, B41J 2/045

(54) **IMAGE PROCESSING METHOD, COMPUTER PROGRAM, RECORDING MEDIUM, IMAGE PROCESSING APPARATUS, AND IMAGE FORMING APPARATUS**
BILDBEARBEITUNGSVERFAHREN, COMPUTERPROGRAMM, AUFZEICHNUNGSMEDIUM, BILDBEARBEITUNGSVORRICHTUNG UND BILDERZEUGUNGSVORRICHTUNG
PROCÉDÉ DE TRAITEMENT D'IMAGE, PROGRAMME D'ORDINATEUR, SUPPORT D'ENREGISTREMENT, APPAREIL DE TRAITEMENT D'IMAGE ET APPAREIL DE FORMATION D'IMAGE

(30) Priority: 08.05.2008 JP 2008122699
(43) Date of publication of application: 12.01.2011
(73) Proprietor: Ricoh Company, Ltd., Tokyo 143-8555 (JP)
(72) Inventor: NAKANO, Naoki, Tokyo 143-8555 (JP); KIMURA, Takashi, Tokyo 143-8555 (JP); HOSHINO, Yoshiaki, Tokyo 143-8555 (JP)
(74) Representative: Schwabe - Sandmair - Marx
(86) International application number: PCT/JP2009/057820
(87) International publication number: WO 2009/136538

(56) References cited:
- WO-A1-2007/114527
- WO-A1-2008/035790
- JP-A- 9 216 388
- JP-A- H09 216 388
- JP-A- 2002 361 910
- JP-A- 2005 329 706
- JP-A- 2005 335 138
- JP-A- 2007 125 827
- JP-A- 2007 313 665
- JP-A- 2008 012 828
- US-A- 5 903 288
- US-A1- 2003 016 261

## Description

### TECHNICAL FIELD

The present invention relates to an image processing method, a computer program, a recording medium, an image processing apparatus, and an image forming apparatus.

### BACKGROUND ART

As a kind of image forming apparatuses including printers, facsimile machines, copiers, and multifunctional products (MFPs), an inkjet image forming apparatus equipped with a recording head that ejects, for example, droplets of liquid has been widely known. The inkjet image forming apparatus ejects ink via the recording head onto a recording medium to form an image. The recording medium (hereinafter, "sheet") is a medium to which the droplets are attachable, such as paper, an overhead projector (OHP) transparency, etc. The phrase "forming images" means, hereinafter, recording, printing, copying, etc. The ink is, hereinafter, liquid with which the images are formed, and includes a so-called ink, a recording liquid, a liquid, etc.

The typical inkjet image forming apparatus is equipped with a black ink and color inks including a cyan (C) ink, a magenta (M) ink, and a yellow (Y) ink. In some cases, the inkjet image forming apparatus reproduces a black image with the color inks.

For example, Japanese Patent Application Laid-open No. 2005-329706 discloses an image forming apparatus capable of reproducing black by combining the color inks only or the black ink with any of the color inks to form an image on the recording medium.

Japanese Patent Application Laid-open No. H10-034977 discloses a technology to form a border area between a black image area and a color image area with both black ink dots and color ink dots including C, M, and Y. The black ink dots are arranged in a checked pattern with an area ratio equal to or lower than 50%. Area ratios of the cyan ink dots, the magenta ink dots, and the yellow ink dots are set equal.

Japanese Patent Application Laid-open No. 2005-335138 discloses a technology capable of printing an image at a first resolution and a second resolution that is lower than the first resolution. The image forming apparatus includes a first ejector that ejects the black ink, and a second ejector that ejects the color inks other than the black ink. When a monochrome image is to be printed based on monochrome print data at the second resolution, the second ejector ejects the color inks onto the sheet to form the monochrome image.

Japanese Patent No. 3291928 discloses a technology to record a color image with the black ink having a low penetration and the color inks having a high penetration. In the conventional technology, some of pixels expected to be in black are printed with the black ink dots, and pixels expected to be in black and adjacent to the black ink dots are printed with the color ink dots in any of C, M, and Y instead of the black ink dots.

Japanese Patent Application Laid-open No. H08-281973 discloses a technology to print, by outputting a first print signal for ejecting the black ink via a first series of nozzle openings and a second print signal for ejecting, the color inks including C, M, and Y via a second series of nozzle openings, a monochrome image in which rich-black dots that are formed by combining the color inks including C, M, and Y are arranged adjacent to real-black dots that are formed with the black ink only.

Japanese Patent Application Laid-open No. H10-034981 discloses a technology to print a black-and-white image with the rich-black dots that are formed with the overlapped color inks including C, M, and Y and the real-black dots that are formed with the black ink only. The black-and-white image is printed at a pixel pitch twice as long as a pixel pitch in the color printing with an amount of the ejected color inks including C, M, and Y being about two-thirds of an amount of the ejected black ink.

Japanese Patent Application Laid-open No. 2000-015798 discloses a technology about image forming by using data indicating that a pixel is to be printed with the black ink (hereinafter, "ejection data") or data indicating that a pixel is to be printed as blank (hereinafter, "non-ejection data"). If one of a focus pixel and an adjacent pixel that is adjacent to the focus pixel is the ejection data and the other one is the non-ejection data, both of the focus pixel and the adjacent pixel are printed with the pale inks including C, M, and Y. If both of the focus pixel and the adjacent pixel are the ejection data, only the focus pixel is set as the ejection data. If both of the focus pixel and the adjacent pixel are the non-ejection data, the image data is binarized again to set the focus pixel as the non-ejection data.

Japanese Patent Application Laid-open No. 2000-015798 also discloses a dot arrangement method for allowing the recording head for the black ink and the recording head for the color inks to eject the ink at different resolutions.

In the inkjet image forming apparatus, the clogged nozzles of the recording head may cause an ejection error such as a miss-ejection and an oblique ejection. To prevent the ejection error, the inkjet image forming apparatus performs a maintenance ejection at each end of the image forming process or when a predetermined time has passed since the last image forming process to maintain or recover conditions of the nozzles without aiming to image forming.

If the image forming apparatus capable of forming color images with the black ink and the color inks does not use the color inks over a certain period because, for example, the image forming apparatus forms monochrome images (black images) only with the black ink only, a degree of drying of the color inks near the nozzles increases, which causes the color-ink nozzles in a state likely to be clogged. To prevent the color-ink nozzles from clogging, it is necessary to frequently perform maintenance such as the maintenance ejection. However, the frequent maintenance disadvantageously decreases the recording speed and increases the recording costs.

The above-described conventional technologies aim to improve the quality of the black image by forming the black image with the color inks. However, the black ink is generally suitable for forming of the black images, and some black images are degraded by replacing the black ink with the color inks. Moreover, some users who cannot understand why only the color inks are consumed even when the black image is printed may hold a misconception about the image forming apparatus.

The present invention has been made to solve the above problems in the conventional technologies and it is an object of the present invention to prevent the color-ink nozzles from clogging by printing a black image with the color inks thereby obtaining an effect equivalent to the maintenance ejection.

US 5,903,288 discloses an ink-jet recording device which determines, using bit-map data, whether or not black ink dots are to be printed in nearby locations that correspond to nozzle holes for colour ink which require flashing. If so, flashing is effected by discharging colourink drops in the locations where black-ink dots are to be formed.

JP 2005-335138 discloses a printing apparatus for printing an image by ejecting ink onto the medium which uses different resolutions for black ink and colour ink.

### DISCLOSURE OF INVENTION

According to one aspect of the present invention, there is provided an image processing method for an image forming apparatus as defined in claim 1.

Furthermore, according to another aspect of the present invention, there is provided an apparatus according to claim 12.

Moreover, according to still another aspect of the present invention, there is provided an image processing apparatus according to claim 13.

generates image data, when an input image is black, such that the image is formed with the black ink and the color ink with a dot of the black ink and a dot of the color ink formed at a same position.

Furthermore, according to still another aspect of the present invention, there is provided an image forming apparatus that includes at least one recording head including a first nozzle line having a first resolution from which a black ink is ejected and a second nozzle line having a second resolution from which at least one color ink is ejected. The image forming apparatus further includes a generating unit that generates image data, when an input image is black, such that the image is formed with the black ink and the color ink with a dot of the black ink and a dot of the color ink formed at a same position.

### BRIEF DESCRIPTION OF DRAWINGS

Fig. 1 is a side view of relative parts of an image forming apparatus that outputs image data that is processed in an image processing method according to an embodiment of the present invention;
Fig. 2 is a top view of the relative parts of the image forming apparatus;

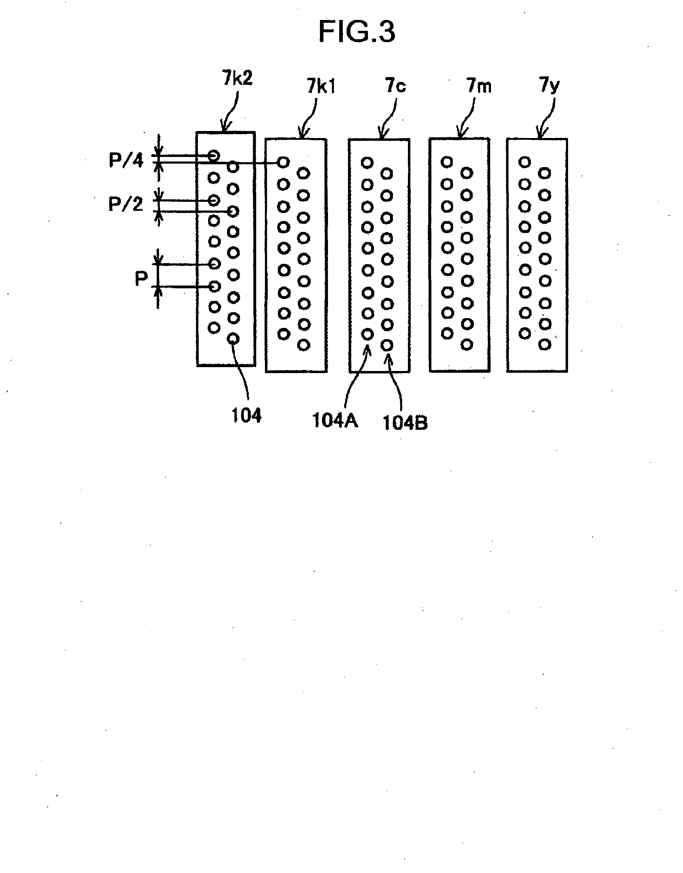

Fig. 3 is a schematic diagram for explaining recording heads shown in Fig. 2;
Fig. 4A is a cross-sectional view of one of the recording heads, taken along a longitudinal axis of an ink liquid chamber;
Fig. 4B is a cross-sectional view of the recording head shown in Fig. 4A, taken along a surface perpendicular to the longitudinal axis of the ink liquid chamber;
Fig. 5 is a block diagram of a control unit of the image forming apparatus;
Fig. 6 is a block diagram of a print control unit shown in Fig. 5;
Fig. 7 is a schematic diagram for explaining a drive waveform that is generated by a drive-waveform generating unit of the print control unit;
Fig. 8 is a schematic diagram for explaining a relation between a size of an ink droplet to be ejected and the drive waveform;
Fig. 9 is a block diagram of a printing system including the image forming apparatus and an image processing apparatus according to the embodiment;
Fig. 10 is a block diagram of the image processing apparatus shown in Fig. 9;
Fig. 11 is a block diagram of a configuration of a printer driver as a computer program according to the embodiment;
Fig. 12 is a block diagram of another configuration of the printer driver;
Fig. 13 is a legend of dots illustrated in Figs. 14 to 21;
Fig. 14 is a schematic diagram for explaining generation of a normal composite black;
Fig. 15 is a schematic diagram for explaining arrangement of dots to form the composite black;
Fig. 16 is a schematic diagram for explaining generation of a 4-color composite black used in the image processing method according to the embodiment;
Fig. 17 is a schematic diagram for explaining generation of the 4-color composite black;
Fig. 18 is a table for explaining a relation between image modes and black image ratios;
Fig. 19 is a schematic diagram for explaining generation of the 4-color composite black differentiated according to the black image ratio;
Fig. 20 is a schematic diagram for explaining a conventional image process;
Fig. 21 is a schematic diagram for explaining dither matrixes that are used in a process of generating image data according to the embodiment;
Fig. 22 is a schematic diagram for explaining the process of generating the image data according to the embodiment;
Fig. 23 is a flowchart of an image processing method of generating the image data according to the embodiment;
Fig. 24 is a schematic diagram for explaining a process of generating jaggy-corrected image data;
Fig. 25 is a schematic diagram for explaining a process of generating bold image data;
Fig. 26 is a schematic diagram for explaining a process of generating bold jaggy-corrected image data;
Fig. 27 is a flowchart of a process of generating the jaggy-corrected image data or the bold jaggy-corrected image data;
Fig. 28 is a graph for explaining usage of ink;
Figs. 29A and 29B are schematic diagrams for explaining a size of a window that is used for pattern matching;
Fig. 30 is a flowchart of a first bold process;
Figs. 31A to 31C are schematic diagrams of 3 dots×3 dots-sized reference patterns that are used in the first bold process;
Figs. 32A and 32B are schematic diagrams of the image data that is processed by using the reference patterns shown in Figs. 31A to 31C;
Fig. 33 is a flowchart of a second bold process;
Figs. 34A to 34E are schematic diagrams of 9 dots×3 dots-sized reference patterns that are used in the second bold process;
Figs. 35A and 35B are schematic diagrams of the image data that is processed by using the reference patterns shown in Figs. 34A to 34E;
Fig. 36 is a schematic diagram of a first example as a resultant of a bold/jaggy-correction process;
Fig. 37 is a schematic diagram of a second example as a resultant of the bold/jaggy-correction process;
Fig. 38 is a schematic diagram of a third example as a resultant of the bold/jaggy-correction process;
Fig. 39 is a schematic diagram of a fourth example as a resultant of the bold/jaggy-correction process;
Fig. 40 is a schematic diagram of a fifth example as a resultant of the bold/jaggy-correction process;
Fig. 41 is a schematic diagram of a sixth example as a resultant of the bold/jaggy-correction process;
Fig. 42 is a schematic diagram of a seventh example as a resultant of the bold/jaggy-correction process;
Fig. 43 is a schematic diagram of an eighth example as a resultant of the bold/jaggy-correction process;
Fig. 44 is a block diagram of a configuration of the printer driver when the jaggy correction is to be performed; and
Fig. 45 is a block diagram of another configuration of the printer driver when the jaggy correction is to be performed.

### BEST MODE(S) FOR CARRYING OUT THE INVENTION

Exemplary embodiments of the present invention are described in detail below with reference to the accompanying drawings.

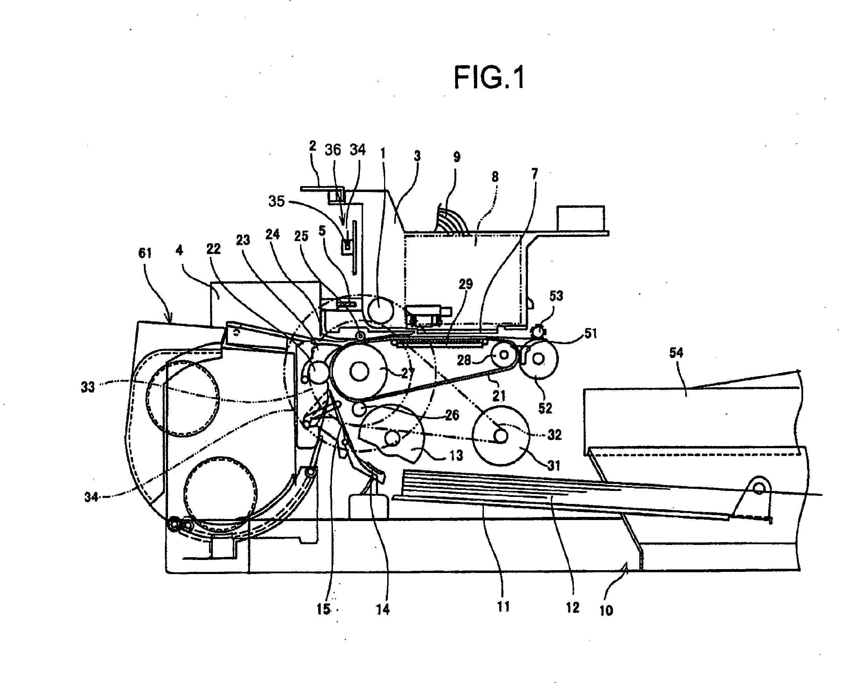

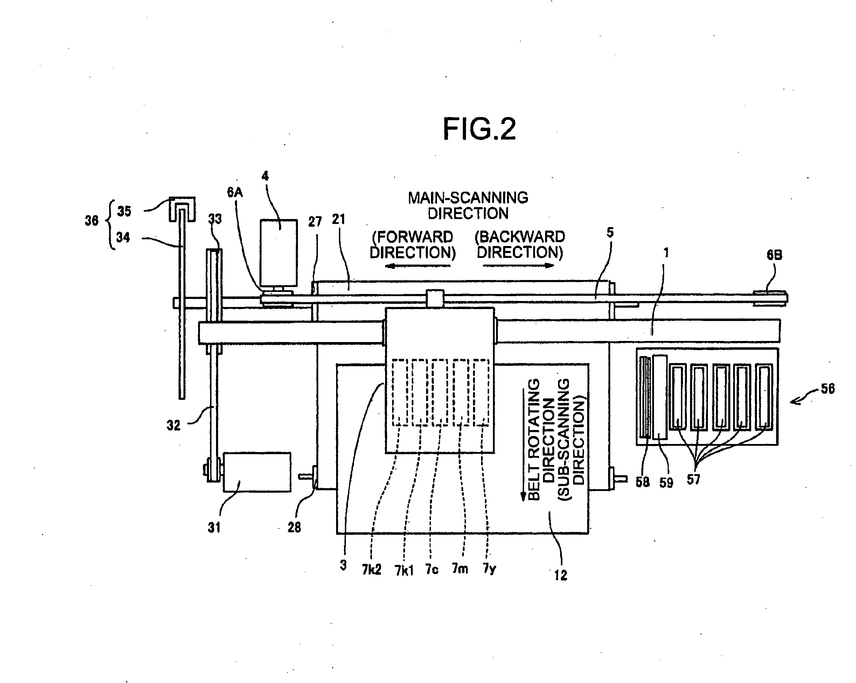

An image forming apparatus that outputs image data that is processed in an image processing method according to an embodiment of the present invention is described with reference to Figs. 1 and 2. Fig. 1 is a side view of relative parts of the image forming apparatus. Fig. 2 is a top view of the relative parts of the image forming apparatus.

The image forming apparatus includes a guiding rod 1 that is supported by a left-side plate (not shown) and a right-side plate (not shown), a guiding rail 2, a carriage 3, a main-scanning motor 4, and a timing belt 5 that is supported by a driving pulley 6A and a driven pulley 6B. The carriage 3 is supported by the guiding rod 1 and the guiding rail 2, movably in the main-scanning direction. The carriage 3 is driven to move in directions indicated by arrows shown in Fig. 2 (i.e., the main-scanning direction) by the main-scanning motor 4 for scanning.

The carriage 3 includes a recording head 7y from which a yellow ink is ejected, a recording head 7m for a magenta ink, a recording head 7c for a cyan ink, and recording heads 7k1 and 7k2 for a black ink. The recording heads 7y, 7m, 7c, 7k1, and 7k2 can be simply called "recording head 7" in the following description if any color of the ink can be applied to the context. The.recording head 7 includes a plurality of nozzles 104 aligned in a direction intersecting with the main-scanning direction. The nozzles 104 are arranged such that ink droplets are ejected downward.

The nozzles 104 are formed with a series of nozzles 104A and a series of nozzles 104B. The recording heads 7y, 7c, and 7m for the color inks and the recording head 7k1 for the black ink are aligned with each other, with one longitudinal end of each of the recording heads 7y, 7c, 7m, and 7k1 located a position the same with respect to the sub-scanning direction. The longitudinal end of the recording head 7k2 for the black ink is arranged deviated from the longitudinal end of the recording head 7k1 in the sub-scanning direction.

More particularly, the nozzles 104A are deviated from the nozzles 104B by a distance of P/2, where P is a pitch between adjacent ones of the nozzles 104A (equal to a pitch between adjacent ones of the nozzles 104B). The recording head 7k2 is deviated from the recording head 7k1 by a distance of P/4. With this configuration, a first resolution by using the recording heads 7k1 and 7k2 for the black ink is set twice as high as a second resolution by using the recording heads 7y, 7m, and 7c for the color inks. That is, a ratio n of the first resolution to the second resolution is two in the present embodiment. The ratio n can be set to any value larger than one.

A recording head that ejects the ink droplets by pressure can be used as the recording head 7. A pressure generating unit used in such a recording head can be, for example, a piezoelectric actuator including a piezoelectric element, a thermal actuator based on phase transition caused by film boiling by using a thermoelectric conversion element such as a thermo resistor, a shape-memory-alloy actuator depending on transition in metallic layers caused by a change in temperature, and an electrostatic actuator by electrostatic force.

Although the recording heads 7 are prepared individually based on color in the embodiment, a single or a plurality of recording heads including a series of nozzles from which two or more inks are ejected can be used. The ink variation can be a six-color type including red (R) and blue (B) in addition to the four colors of CMYK, another six-color type including light cyan (LC) and light magenta (LM) in addition to CMYK, or a seven-color type including LC, LM, and R in addition to CMYK.

The carriage 3 includes color-based sub-tanks 8 each of which supplies the corresponding ink to the corresponding recording head 7. Each of the sub-tanks 8 is connected to a main-tank (ink cartridge) (not shown) via an ink supplying tube 9. The ink is supplied from the main-tank to the sub-tank 8.

The image forming apparatus includes a paper feed unit that feeds sheets 12 stacked on a paper stack plate 11 one by one from a paper cassette 10. The paper feed unit includes a half-moon paper feed roller 13 and a separation pad 14 that is opposed to the paper feed roller 13. The separation pad 14 is made of a material with a coefficient of friction larger than that of the paper feed roller 13. The separation pad 14 is biased toward the paper feed roller 13.

The sheet 12, after fed by the paper feeding unit, is guided by a guiding member 15 to a conveyer belt 21, and then attached to an outer surface of the conveyer belt 21 by electrostatic force. Thus, the sheet 12 is conveyed to under the recording heads 7 by rotation of the conveyer belt 21. More particularly, the sheet 12 is conveyed almost upward first, passed between a counter roller 22 and the conveyer belt 21. The sheet 12 is then guided by a conveyer guiding member 23 in such a manner that a sheet conveying direction is turned by about 90 degrees along the conveyer belt 21. After that, the sheet 12 is pressed by a pressure roller 25 toward the conveyer belt 21 by force of a pressing member 24. A charging roller 26 that charges the outer surface of the conveyer belt 21 is arranged near the conveyer belt 21.

The conveyer belt 21 is an endless belt, and supported by a conveyer roller 27 and a supporting roller 28. The conveyer belt 21 is rotated in the sheet conveying direction shown in Fig. 2 (i.e., the sub-scanning direction) by rotation of the conveyer roller 27 driven by a sub-scanning motor 31 via a timing belt 32 and a timing roller 33. A guiding member 29 is arranged near an inner surface of the conveyer belt 21 as opposed to an image forming area of the recording heads 7. The charging roller 26 is rotated by rotation of the conveyer belt 21, being in contact with the outer surface of the conveyer belt 21.

As shown in Fig. 2, a circular plate 34 having a slit is attached to a shaft of the conveyer roller 27. An encoder sensor 35 is arranged to detect the slit of the circular plate 34. The circular plate 34 and the encoder sensor 35 form a rotary encoder 36.

After the image is formed on the sheet 12 by using the recording heads 7, a discharge unit discharges the sheet 12 out of the image forming apparatus. The discharge unit includes a separation claw 51 that separates the sheet 12 from the conveyer belt 21, a pair of discharge rollers 52 and 53, a receiving tray 54 that receives the sheet 12 discharged out of the image forming apparatus.

A duplex-mode paper feed unit 61 is arranged in a backside section of the image forming apparatus in a detachable manner. When the sheet 12 with a first surface facing outward is conveyed to the duplex-mode paper feed unit 61 by reverse rotation of the conveyer belt 21, the duplex-mode paper feed unit 61 receives the sheet 12, and feeds the sheet 12 to between the counter roller 22 and the conveyer belt 21 with a second surface opposite to the first surface facing outward.

As shown in Fig. 2, a maintenance/recovery system 56 is arranged in one of non-printing areas each extending near one end of a scanning direction of the carriage 3. The maintenance/recovery system 56 is used for maintenance/recovery of the nozzles of the recording head 7, and.

The maintenance/recovery system 56 includes a plurality of caps 57, a wiper blade 58, and an ink receiver 59. The caps 57 cover surfaces of the nozzles of the recording head 7. The wiper blade 58 is a blade member with which the surfaces of the nozzles are wiped. When the recording head 7 ejects ink droplets with adhesive ink at the maintenance ejection without aiming to form an image, the ink receiver 59 receives the ejected ink droplets.

In the image forming apparatus, the paper feed unit feeds the sheets 12 one by one, and conveys the sheets 12 upward in the almost vertical direction. The sheet 12 is then guided by the conveyer guiding member 23 to between the pressure roller 25 and the conveyer belt 21. The sheet 12 is turned by about 90 degrees, pressed by the pressure roller 25 toward the conveyer belt 21.

An alternating-current (AC)-bias supply unit 212 applies, under control of a control unit 200, alternating voltages alternating between the positive and the negative to the charging roller 26. As a result, the conveyer belt 21 is charged with the voltage in such a pattern positive areas that are charged with the positive voltage and negative areas that are charged with the negative voltage appear alternatively at regular intervals in the circumferential direction, i.e., the sub-scanning direction. When the sheet 12 comes in contact with the charged surface of the conveyer belt 21, the sheet 12 is attached to the conveyer belt 21 by the electrostatic force. Thus, the sheet 12 is conveyed in the sub-scanning direction by circumferential rotation of the conveyer belt 21.

The sheet 12 is then stopped under the carriage 3. The carriage 3 moves back and forth above the sheet 12 to record one line of the image with the recording heads 7 that are driven based on the image signal. After the line is recorded, the sheet 12 is conveyed by a predetermined distance, and then stopped for recording of a next line. When a recording completion signal is received or when a signal indicating that a trailing end of the sheet 12 is within a recording area, the recording operation is terminated and the sheet 12 is discharged onto the receiving tray 54.

In the duplex printing mode, when the recording on the first surface (surface to be printed first) is finished, the sheet 12 is conveyed to the duplex-mode paper feed unit 61 by reverse rotation of the conveyer belt 21. The duplex-mode paper feed unit 61 feeds the received sheet 12 to between the counter roller 22 and the conveyer belt 21 with the second surface opposite to the first surface facing outward at proper timing. The second surface of the sheet 12 is recorded in the same manner. After the recording on the second surface is finished, the sheet 12 is discharged onto the receiving tray 54.

During a printing (recording) stand-by time, the carriage 3 is at a stand-by position near the maintenance/recovery system 56 with the nozzle surfaces of the recording head 7 is covered with the caps 57 to maintain a water content of the ink near the nozzles. Due to this, the ejection error is prevented. Moreover, a recovery operation of absorbing the ink from the nozzles with the recording head 7 covered with the caps 57 is performed to eject the adhesive ink or air bubbles. The ejected ink will be attached to the nozzle surface of the recording head 7 after the recovery operation. The attached ink is removed from the nozzle surface with the wiper blade 58. Furthermore, the maintenance ejection, i.e., an ejection of the ink without aiming to forming an image is performed before a start of the recording or in the middle of the recording. Thus, the performance on the ejection of the ink from the recording head 7 is maintained.

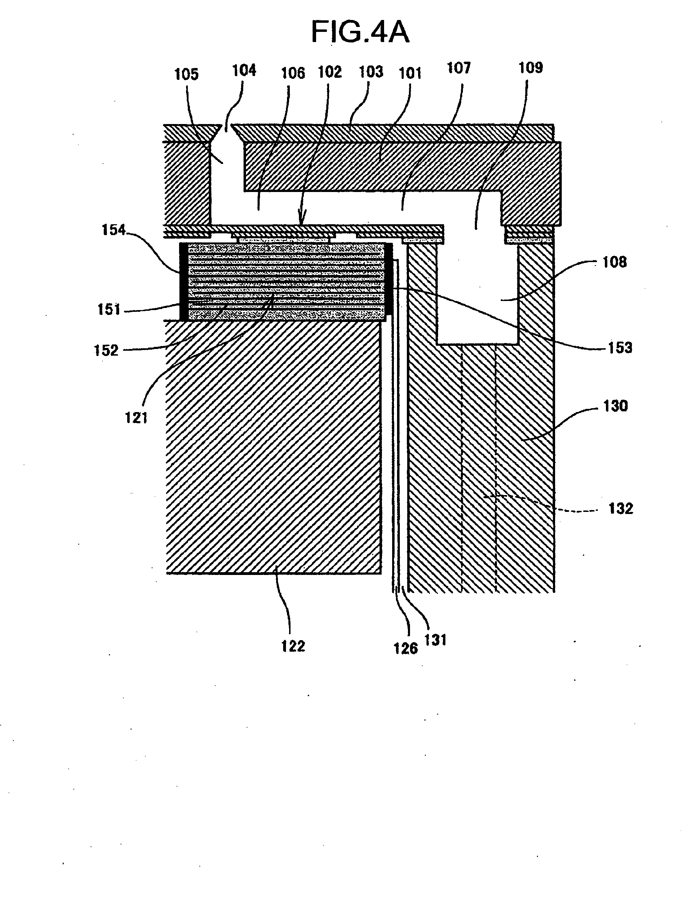

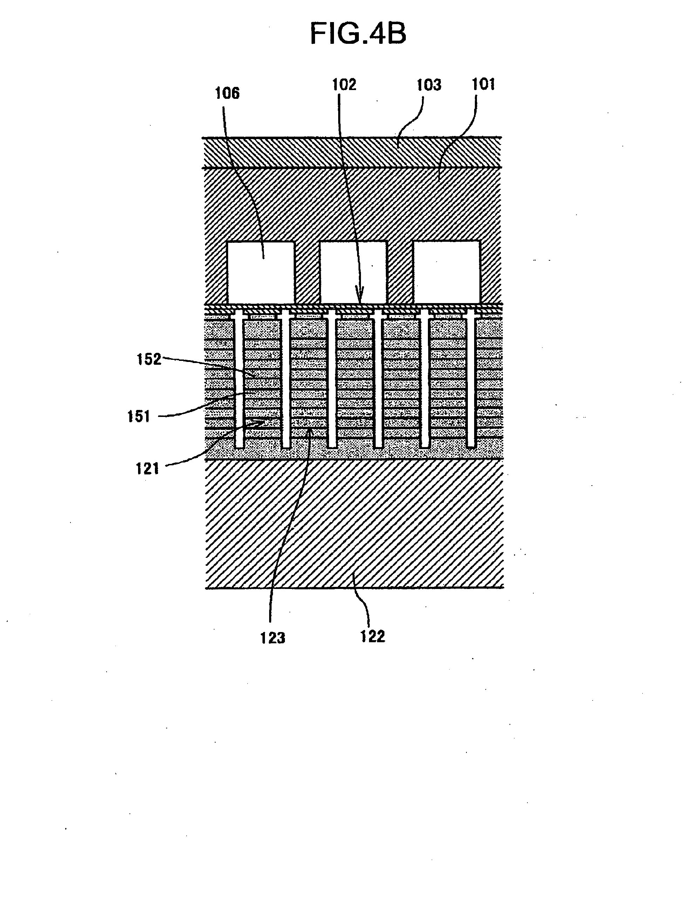

The recording head 7 is described with reference to Figs. 4A and 4B. Fig. 4A is a cross-sectional view of the recording head 7, taken along a longitudinal axis of an ink liquid chamber 106. Fig. 4B is a cross-sectional view of the recording head 7, taken along a surface perpendicular to the longitudinal axis of the ink liquid chamber 106.

The recording head 7 includes a flow path plate 101 that defines a flow path through which the ink is ejected, a vibration plate 102 that is jointed with a lower surface of the flow path plate 101, and a nozzle plate 103 that is jointed with an upper surface of the flow path plate 101. The flow path plate 101 is, for example, is a monocrystalline silicon substrate having a flow path that is formed by anisotropic etching. The vibration plate 102 is, for example, an electro-formed nickel substrate. The flow path includes a nozzle connection section 105 connecting to the nozzle 104 from which the ink droplets are ejected, the ink liquid chamber 106 that expands/shrinks to generate a certain pressure, an ink liquid supply path 107, a common ink-liquid chamber 108, and an ink supply port 109 connecting to the common ink-liquid chamber 108. The ink flows from the common ink-liquid chamber 108 to the ink liquid chamber 106 via the ink supply port 109 and the ink liquid supply path 107.

The recording head 7 includes an actuator unit including two series of layered piezoelectric element 121 (only one series of the piezoelectric element 121 is shown in Fig. 4A) and a base substrate 122 on which the piezoelectric element 121 are formed. The piezoelectric element 121 deform the vibration plate 102, which generates the pressure applied to the ink inside the ink liquid chamber 106. There are supporting members 123 between the piezoelectric element 121. Both the supporting members 123 and the piezoelectric element 121 are separated from a single piezoelectric device. Because no driving voltage is applied to the supporting members 123, the supporting members 123 merely support the piezoelectric element 121. The piezoelectric element 121 is connected to a flexible printed circuit (FPC) cable 126 mounted with a driving circuit (driving integrated circuit (ID)) (not shown).

A circumferential section of the vibration plate 102 is jointed with a frame member 130. The frame member 130 has a concave section as a through-hole section 131 and the common ink-liquid chamber 108, and an ink supply path 132 via which the ink is supplied from outside to the common ink-liquid chamber 108. The through-hole section 131 accommodates the actuator unit including the piezoelectric element 121 and the base substrate 122. The frame member 130 is made of, for example, a thermosetting resin such as an epoxy-based resin or a polyphenylene sulfide resin, and is formed, for example, by injection molding.

In the embodiment, the flow path plate 101 is a monocrystalline silicon substrate having the flow path that is formed as concaves or holes by the anisotropic etching with an alkaline etcher, such as a potassium hydroxide solution. The flow path defines the nozzle connection section 105 and the ink liquid chamber 106. The flow path plate 101 can be formed based on some other substrates, for example, a stainless substrate or a photopolymer substrate instead of the monocrystalline silicon substrate.

The vibration plate 102 is an electro-formed nickel plate. Some other metallic plates or plates including a metallic layer and a resin layer can be used as the vibration plate 102. The piezoelectric element 121 and the supporting members 123, and the frame member 130 are bonded to the vibration plate 102 with an adhesive agent.

The nozzle plate 103 defines the nozzle 104 connecting to the ink liquid chamber 106. The diameter of the nozzle 104 is from 10 micrometers (µm) to 30 µm. The nozzle plate 103 is bonded to the flow path plate 101 with an adhesive agent. The nozzle plate 103 includes a metallic layer for defining the nozzle 104 and a water repellent layer. The water repellent layer is formed as an uppermost layer above the metallic layer via a predetermined layer.

The piezoelectric element 121 is a piezoelectric transducer (PZT), and includes piezoelectric components 151 and internal electrodes 152 that are layered alternatively. The internal electrodes 152 are extracted to two different surfaces, alternatively, and are connected to an individual electrode 153 and a common electrode 154, alternatively. In the present embodiment, the pressure is applied to the ink inside the ink liquid chamber 106 by effect of a piezoelectric displacement of d33 in the piezoelectric element 121. The piezoelectric displacement can be d31 instead of d33. Only one series of the piezoelectric element 121 can be formed on the single base substrate 122.

In the recording head 7, when the voltage that is applied to the piezoelectric element 121 decreases from a reference potential, the piezoelectric element 121 shrinks, which lowers a level of the vibration plate 102, i.e., increases a volume of the ink liquid chamber 106. As a result, the ink flows into the ink liquid chamber 106. After that, when the voltage that is applied to the piezoelectric element 121 increases, the piezoelectric element 121 expands in the layered direction, which deforms the vibration plate 102 convex toward the nozzle 104, i.e., the volume of the ink liquid chamber 106 decreases. As a result, the pressure is applied to the ink inside the ink liquid chamber 106, and the ink droplet is ejected from the nozzle 104.

When the voltage that is applied to the piezoelectric element 121 decreases to the reference potential, the vibration plate 102 moves to the default position, i.e., the ink liquid chamber 106 expands. As a result, the ink flows from the common ink-liquid chamber 108 to the ink liquid chamber 106 by negative pressure generated at the ink liquid chamber 106. After the vibration at a meniscus surface of the nozzle 104 is damped and the nozzle 104 returns to a stable state, the recording head 7 prepares for a next ejection.

Although the recording head 7 is driven to extend the meniscus surface inward first and then outward before the ejection in the embodiment, it is allowable to drive the recording head 7 in some other manners by using various drive waveforms. For example, the recording head 7 can be driven to extend the meniscus surface inward only or the meniscus surface outward only before the ejection.

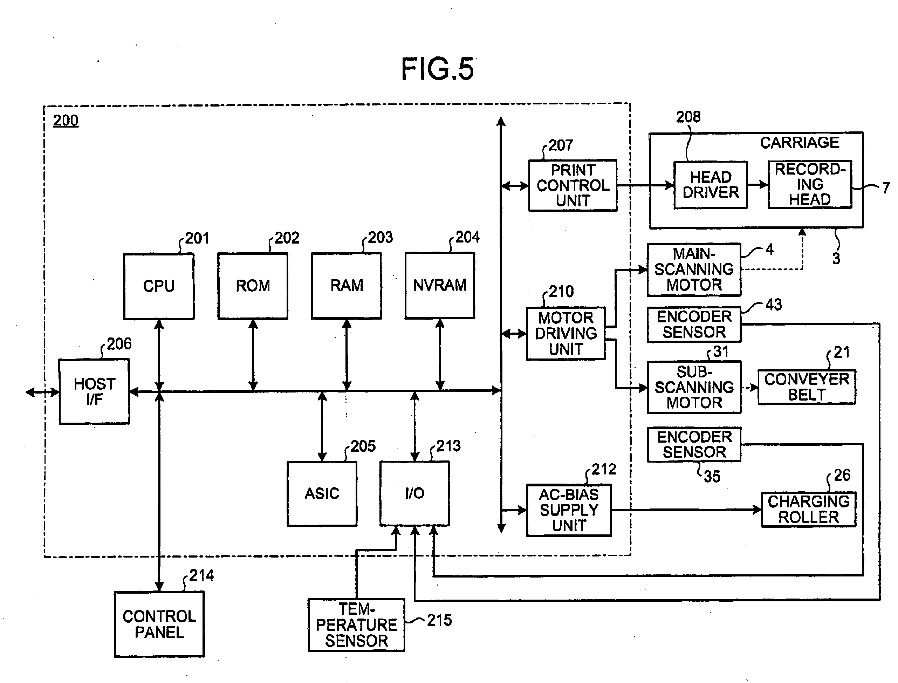

The configuration of the control unit 200 of the image forming apparatus is described with reference to the block diagram shown in Fig. 5. The control unit 200 includes a central processing unit (CPU) 201, a read only memory (ROM) 202, a random access memory (RAM) 203, a nonvolatile memory (NVRAM) 204, and an application specific integrated circuit (ASIC) 205. The CPU 201 controls the image forming apparatus. Moreover, the CPU 201 corrects jaggies at a contour of the image. The ROM 202 stores therein various computer programs to be executed by the CPU 201 and fixed data, etc. The RAM 203 temporarily stores therein various data such as image data. The NVRAM 204 is a writable nonvolatile memory that is used for retaining data during a period where the power of the image forming apparatus is OFF. The ASIC 205 processes various input/output (I/O) signals including signals related to the image data, signals for rearrangement or the like, and signals for controlling the image forming apparatus.

The control unit 200 includes a host interface (I/F) 206, a print control unit 207, a head driver (driver IC) 208, a motor driving unit 210, the AC-bias supply unit 212, and an I/O 213. The host I/F 206 is used to send/receive various data and signals to/from a host apparatus. The print control unit 207 includes a data transfer unit 302 that controls driving of the recording head 7 and a drive-waveform generating unit 301 that generates a drive waveform. The head driver 208 drives the recording head 7 located near the carriage 3. The motor driving unit 210 drives the main-scanning motor 4 and the sub-scanning motor 31. The AC-bias supply unit 212 supplies the AC bias to the charging roller 26. The I/O 213 receives detection signals from various sensors such as the encoder sensor 35 of the rotary encoder 36, and a temperature sensor 215 that detects an ambient temperature as a dot-shift factor. The control unit 200 is connected to a control panel 214. The control panel 214 is used to receive inputs of information necessary for the image forming apparatus, and display information.

The control unit 200 receives various data including the image data from the host apparatus via the host I/F 206 and a cable or the Internet. The host apparatus can be, for example, an information processing apparatus such as a personal computer (PC), an image reading device such as an image scanner, or an image capture device such as a digital camera.

The CPU 201 of the control unit 200 reads print data from a receiving buffer included in the host I/F 206, and analyzes the print data. The ASIC 205, under control of .the CPU 201, performs image processing or rearrangement with the print data, and thereby generates the desired print data. The CPU 201 sends the desired print data from the print control unit 207 to the head driver 208. As described later, dot-pattern data that is necessary for image outputting is generated by a printer driver of the host apparatus.

The print control unit 207 sends the image data to the head driver 208 in the serial data transfer, together with signals necessary for transferring the image data or checking the transfer including a transfer clock, a latch signal, and a droplet control signal (mask signal). The print control unit 207 includes a digital-to-analog (D/A) convertor (not shown), the drive-waveform generating unit 301, and a drive-waveform selecting unit (not shown). The D/A convertor converts digital pattern data indicative of the drive signal stored in the ROM 202 into analog data. The drive-waveform generating unit 301 includes a voltage amplifier and a current amplifier. The drive-waveform selecting unit selects a drive waveform to be sent to the head driver 208. The print control unit 207 generates the drive waveform including at least one drive pulse (drive signal), and sends the generated drive waveform to the head driver 208.

The head driver 208 drives the recording head 7 as follows. Upon receiving the image data and the drive signal forming the drive waveform from the print control unit 207 in the serial data transfer, the head driver 208 applies, based on a piece of the image data equivalent to a line of the recording head 7, the voltage to a target driving element (e.g., above-described piezoelectric element) so that the target driving element generates the energy that causes the ink droplet to eject from the recording head 7. The size of the ink droplet can be selectively changed from among, for example, a large size (large dot), a medium size (medium dot), and a small size (small dot) according to a selected drive pulse forming the drive waveform.

The CPU 201 calculates a drive output value (control value) of the main-scanning motor 4 based on a current speed value and a current position value that are obtained by sampling a detection pulse received from an encoder sensor 43 as a part of a linear encoder and a target speed value and a target position that is obtained from a pre-stored speed/position profile, and drives the main-scanning motor 4 with the calculated drive output value via the motor driving unit 210. Moreover, the CPU 201 calculates the drive output value (control value) of the sub-scanning motor 31 based on a current speed value and a current position value that are obtained by sampling a detection pulse received from the encoder sensor 35 as a part of the rotary encoder 36 and a target speed value and a target position that is obtained from a pre-stored speed/position profile, and drives the sub-scanning motor 31 with the calculated drive output value via the motor driving unit 210.

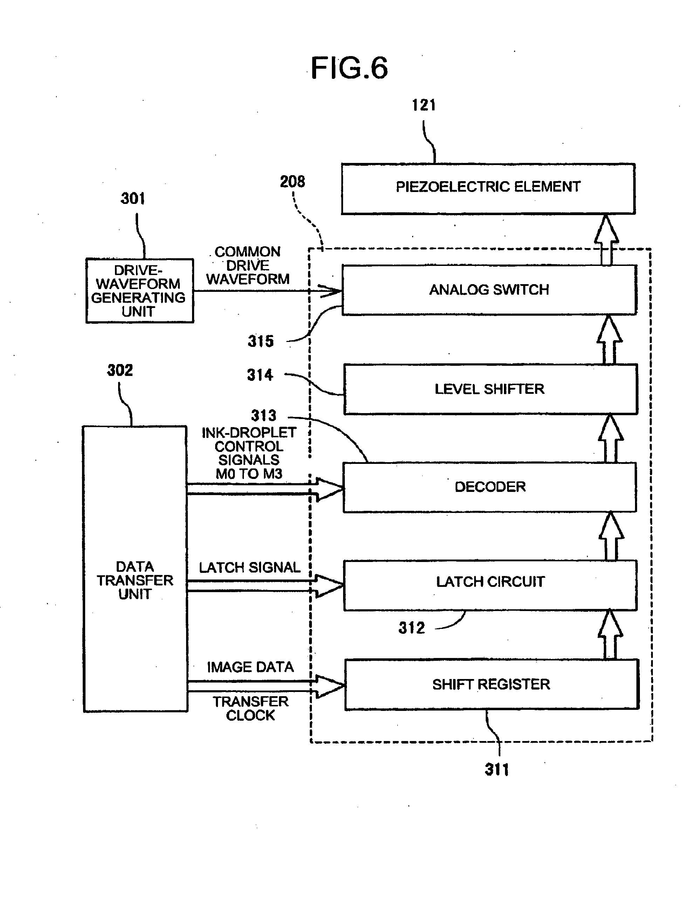

The configurations of the print control unit 207 and the head driver 208 are described with reference to Fig. 6.

The print control unit 207, as described above, includes the drive-waveform generating unit 301 and the data transfer unit 302. The drive-waveform generating unit 301 generates the drive waveform (common drive waveform) including a plurality of drive pulses (driving signals) within one printing cycle, and outputs the generated drive waveform. The data transfer unit 302 outputs 2-bit image data (tone signal of 0 or 1), a clock signal, a latch signal (LAT signal), and ink-droplet control signals M0 to M3.

The ink-droplet control signals M0 to M3 are issued on the droplet-to-droplet basis to set an analog switch 315 as a switch unit to open/close. When one of the ink-droplet control signals M0 to M3 is selected, the selected ink-droplet control signal is set to ON, i.e., a high level (H level) in synchronized with the printing cycle of the common drive waveform. The unselected ink-droplet control signals are set to OFF, i.e., a low level (L level).

The head driver 208 includes a shift register 311, a latch circuit 312, a decoder 313, a level shifter 314, and the analog switch 315. The shift register 311 receives the transfer clock (shift clock) and the serial image data (tone data that is transferred at 2 bits per channel) from the data transfer unit 302. The latch circuit 312 sets a resist value of the shift register 311 latched by using a latch signal. The decoder 313 decodes the tone data and the ink-droplet control signals M0 to M3, and outputs a result of the decoding. The level shifter 314 shifts a logic-level voltage signal of the decoder 313 to a level on which the analog switch 315 is operable. The analog switch 315 receives the output of the decoder 313 via the level shifter 314, and sets ON or OFF (opens or closes) according to the received output.

The analog switch 315 is connected to the individual electrodes 153 connecting to the piezoelectric element 121. The analog switch 315 receives the common drive waveform from the drive-waveform generating unit 301. With this configuration, when the analog switch 315 turns ON according to the output of the decoder 313 that is obtained by decoding the serially-transferred image data (tone data) and the ink-droplet control signals M0 to M3, a certain drive signal forming the common drive waveform passes through the analog switch 315 (the certain drive signal is selected), and thus the target (selected) piezoelectric element 121 is charged.

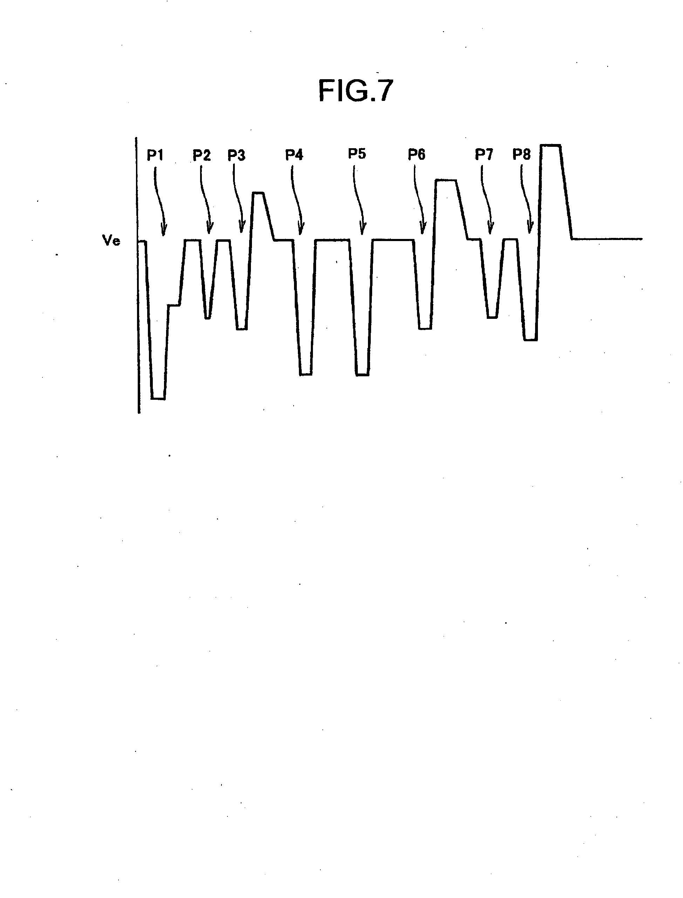

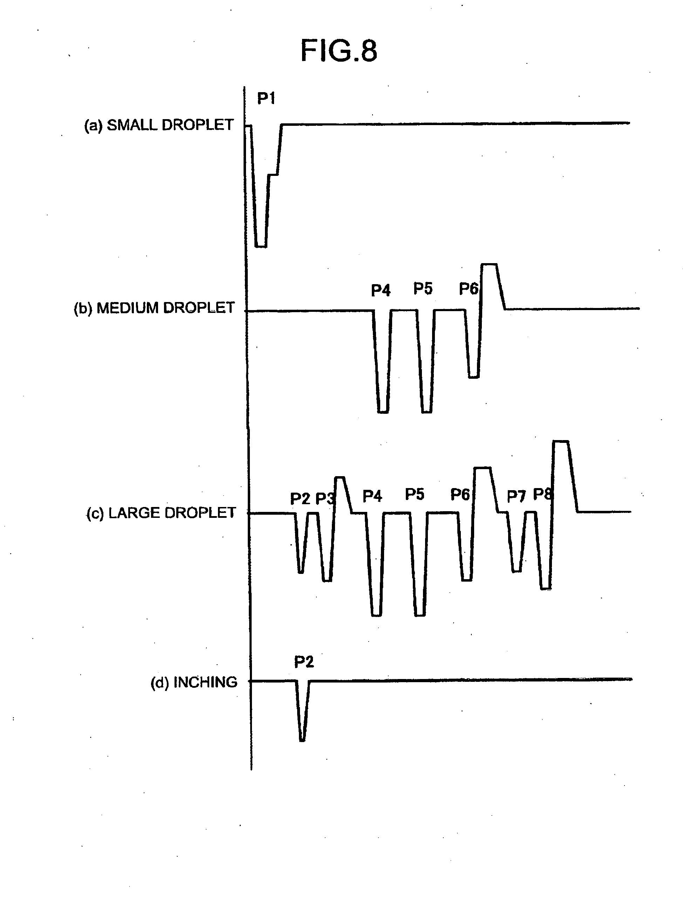

The drive waveform is described in detail with reference to Figs. 7 and 8.

As shown in Fig. 7, the drive waveform includes, within one printing cycle (driving cycle), a falling edge that falls from a reference potential Ve and eight drive signals (drive waveforms) subsequent to the falling edge including drive pulses P1 to P8 as rising edges and falling edges. One of the drive pulses is selected based on the ink-droplet control signals M0 to M3 that is received from the data transfer unit 302.

As represented by the first falling edge, a potential V of the drive pulse falls from the reference potential Ve, which shrinks the piezoelectric element 121 and thereby increases the volume of the ink liquid chamber 106. As represented by the subsequent rising edges, the potential V rises after the first falling, which expands the piezoelectric element 121 and thereby decreases the volume of the ink liquid chamber 106.

If the small ink droplets (small dots) are to be ejected, the drive pulse P1 is selected by referring to the ink-droplet control signals M0 to M3 as shown in (a) of Fig. 8. If the medium droplets (medium dots) are to be ejected, the drive pulses P4 to P6 are selected as shown (b) of Fig. 8. If the large ink droplets (large dots) are to be ejected, the drive pulses P2 to P8 are selected as shown in (c) of Fig. 8. If the meniscus surface is inched without causing ink droplets to eject, the drive pulse P2 is selected as shown in (d) of Fig. 8. In this manner, only the target piezoelectric element 121 of the recording head 7 is charged.

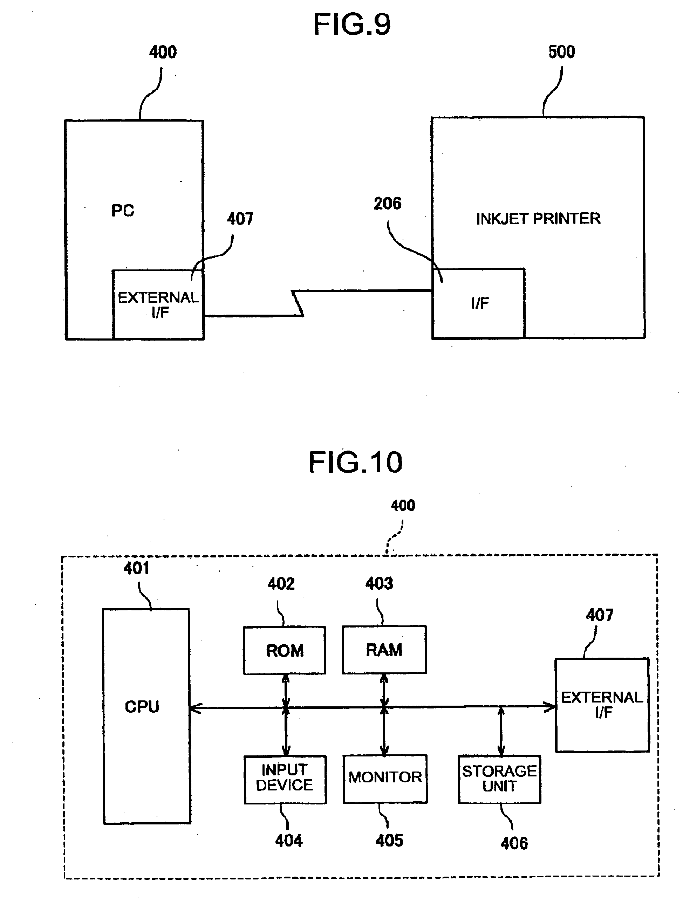

An image processing apparatus 400 that stores therein a computer program that causes an image forming apparatus 500 to implement a method of outputting the print image according to the embodiment, and the image forming apparatus 500 are described with reference to Fig. 9. Although the single image processing apparatus 400 and the single image forming apparatus 500 are shown in Fig. 9, the numbers of the image processing apparatus 400 and the image forming apparatus 500 can be two or larger. The image forming apparatus 500 is assumed to be an inkjet printer in the following embodiment, and is called "inkjet printer 500".

In a printing system (image forming system), the image processing apparatus 400, such as a PC, is connected to the inkjet printer 500 via predetermined I/Fs or a network.

The image processing apparatus 400 includes, as shown in Fig. 10, a CPU 401 and memories including a ROM 402 and a RAM 403, connected to each other via a bus line. The bus line is connected to, via an I/F, a magnetic storage unit 406, such as a hard disk drive (HDD), and an input device 404, such as a mouse and a keyboard, a monitor 405, such as a liquid crystal display (LCD) or a cathode-ray tube (CRT) display, and a reading device (not shown) that reads a recording medium such as an optical disk. The bus line is connected to a predetermined I/F (external I/F) 407.

The storage unit 406 stores therein an image processing program according to the embodiment. The image processing program is installed in the storage unit 406 after read by the reading device from a recording medium or downloaded via a network, such as the Internet. The image processing apparatus 400 can perform following image processing with the image processing program. The image processing program can be designed to run on a predetermined operating system (OS) or operate as a part of predetermined application software.

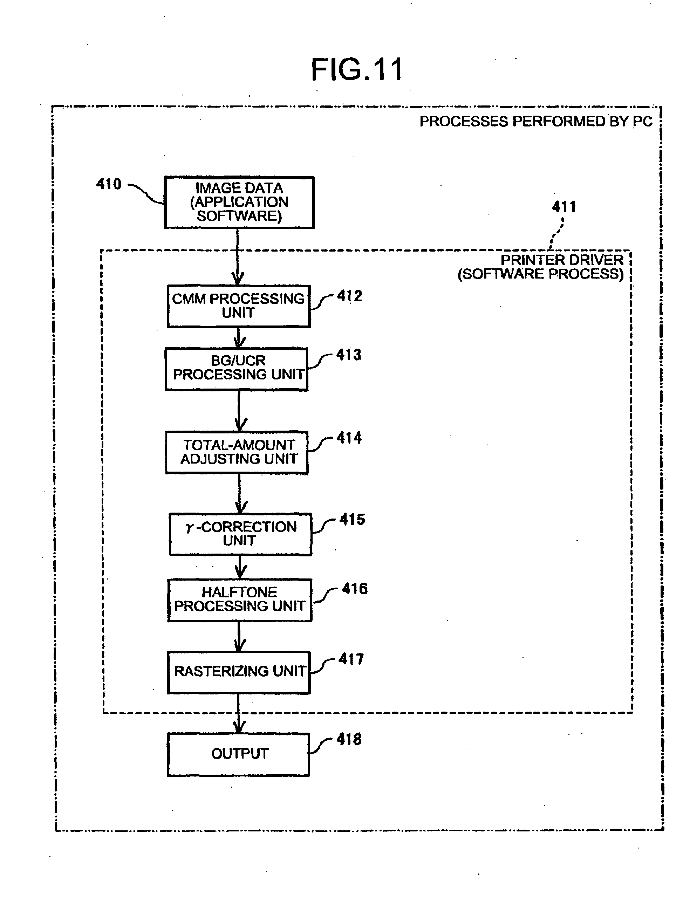

An image processing method that is performed by executing the image processing program stored in the image processing apparatus 400 is described with reference to the block diagram shown in Fig. 11 according to the embodiment.

The image processing apparatus (PC) 400 stores therein a printer driver 411 as the image processing program. The printer driver 411 includes a color management module (CMM) processing unit 412, a black generation/under color removal (BG/UCR) processing unit 413, a total-amount adjusting unit 414, a γ-correction unit 415, a zooming unit (not shown), a halftone processing unit (multi-valued or binary-valued matrix) 416, and a rasterizing unit 417. The CMM processing unit 412 transforms image data 410 that is received from the application software or the like from a color space for the monitor 405 to a color space for the image forming apparatus 500, i.e., the RGB color model to the CMYK color model. The BG/UCR processing unit 413 performs black generation and under color removal by using the CMYK values. The total-amount adjusting unit 414 corrects the CMYK signals so that the amount of each ink does not exceed an upper limit. The γ-correction unit 415 performs input/output correction, taking properties of the image forming apparatus 500 and requirements of the user into consideration. The zooming unit enlarges the image according to the resolution of the image forming apparatus 500. The halftone processing unit 416 transforms the image data to a pattern arrangement of dots used in the image forming apparatus 500 by using a dither matrix, including a multi-valued matrix and a binary-valued matrix, thereby generating dot pattern data as the print image data. The rasterizing unit 417 separates the dot pattern data that is generated in the halftone process into pieces of data each corresponding to a single scan, and loads the separated pieces of data one by one, aligning with positions of the corresponding nozzles, thereby obtaining output 418. The output 418 of the rasterizing unit 417 is sent to the inkjet printer 500.

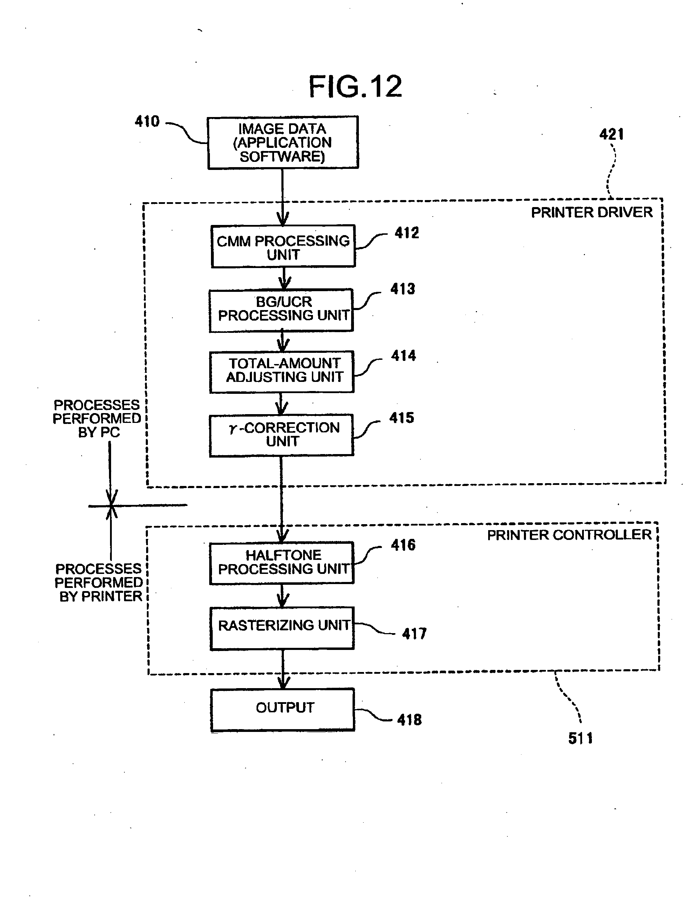

A part of the above-described image processing can be performed by the inkjet printer 500. A modification of the image processing method is described with reference to the block diagram shown in Fig. 12. In the modification, some processes are performed by the image processing apparatus 400 and the other processes are performed by the inkjet printer 500.

A printer driver 421 of the image processing apparatus (PC) 400 sends the image data that is subjected to the γ correction and the preceding processes to the inkjet printer 500.

A printer controller 511 (the control unit 200) of the inkjet printer 500 includes the zooming unit, the halftone processing unit 416, and the rasterizing unit 417. The output 418 of the rasterizing unit 417 is sent to the print control unit 207.

Although both examples of the image processing method shown in Figs. 11 and 12 are effective, the following description is made assuming that the image processing apparatus 400 and the inkjet printer 500 are configured as shown in Fig. 11. More particularly, the inkjet printer 500 receives an image/text print command together with the dot pattern based on which dots are ejected, without generating the dot pattern. In other words, in the image processing apparatus 400 as the host apparatus, the printer driver 411 that is installed as the software program in the image processing apparatus 400 receives a draw command or a print command from the application software being running on the image processing apparatus 400, generates, through the image processing, the multi-valued dot pattern data (print image data) in a form printable by the inkjet printer 500, generates raster image data from the dot pattern data, and sends the raster image data to the inkjet printer 500. Upon receiving the raster image data, the inkjet printer 500 prints the image from the received data.

In the image processing apparatus 400, more particularly, the draw command and the print command (e.g., data describing a position, a thickness, a shape of a line to be recorded, data describing a font, a size, and a position of a character to be recorded, etc.) is temporarily stored in a draw data memory (not shown). Those commands are described in a predetermined printing language.

The commands stored in the draw data memory is analyzed by the rasterizer. If the analyzed command is a command to record a line, the data is converted to a dot pattern representing a line with the specified thickness arranged at the specified position. If the analyzed command is a command to record a character, the data is converted, by using data about an outline of the target character that is acquired from font outline data stored in the image processing apparatus (host computer) 400, to a dot pattern representing the target character with the specified size arranged at the specified position. If the analyzed command is image data, the image data is simply converted to a dot pattern.

After the dot pattern (the image data 410) is subjected to the image processing, the processed dot pattern is stored in a raster data memory (not shown). More particularly, the dot pattern is stored as the raster data. The image processing apparatus 400 converts the dot pattern to the raster data with an orthogonal grid as a reference recording position before the storing. The image processing can include, for example, the CMM process for adjusting color, the halftone process including the γ correction, the dithering, and the error diffusion technique, the under color removal, and the total ink amount adjusting. The dot pattern that is stored in the raster data memory is sent to the inkjet printer 500 via the I/Fs.

The image processing method according to the embodiment is described below.

A method of reproducing black by combining the color inks other than the black ink or combining the black ink with any of the color inks is described below. As described above, the four inks including C, M, Y, and K or, if a higher quality is required, the six or seven inks including pale inks called "photo inks" such as photo cyan or photo magenta in addition to the four primary inks are used for the color reproduction in the inkjet printer.

The black ink is basically used for reproduction of black. However, black can be reproduced by combining cyan dots, magenta dots, and yellow dots (hereinafter, "CMY dots") according to the principle of subtractive color mixing saying that the brightness and the color saturation decrease as more and more colors are overlapped.

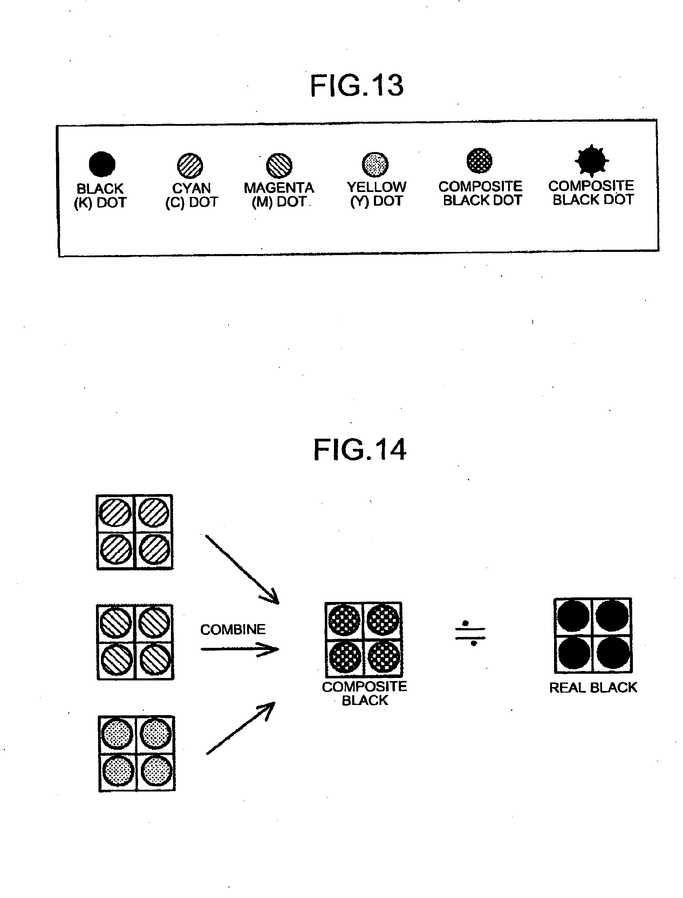

In the following description, black reproduced with the CMY dots (the color inks including C, M, and Y) is called "composite black", black reproduced with the black ink only is called "real black", and black reproduced with the four colors including C, M, Y, and K is called "4-color composite black". Marks distinguishing between those dots are shown in Fig. 13. The marks representing the C dot, the M dot, and the Y dot are circles in unique patterns. The mark representing the K dot is a circle in black. The mark representing the composite black dot is a circle in a pattern that is obtained by overlapping the patterns unique to the CMY dots. The mark representing the 4-color composite black dot is a circle in black attached with spur-like outshoots. It is noted that those marks do not represent a shape of dots or a density.

As shown in Fig. 14, the composite black is formed by combining the CMY dots. The composite black can be bluish black or reddish black depending on a degree of overlapping of the CMY dots. The CMK dots are intentionally shifted from each other to prevent unclarity caused by the composite black dot that is formed by overlapping the CMY dots (hereinafter, "3K dot") or a decrease in graininess because of the presence of the 3K dot (including the black dot) that is noticeable as compared with the individual CMY dots.

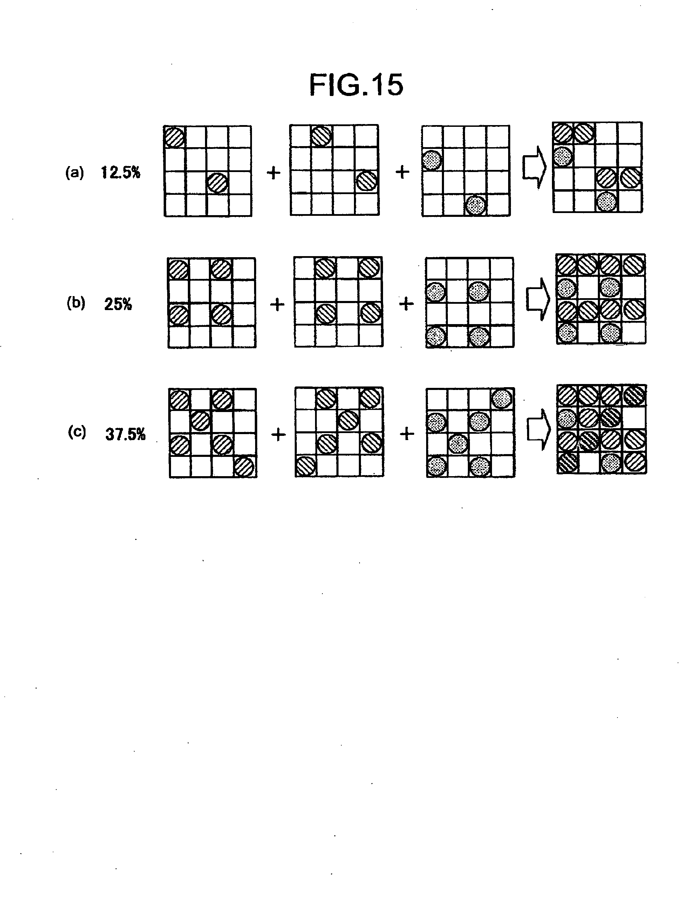

More particularly, as shown in Fig. 15, in the halftone process, the arrangement pattern of the CMY dots are adjusted in such a manner that the 3K dots are less likely to be formed. In the example shown in Fig. 15, a single dot pattern is generated (by Bayer dithering) by using different coordinates on the color basis in such a manner that the dots are less likely to be overlapped with each other, specially, in the lower tone level. Some other techniques such as rotating the generation pattern or using the completely different generation patterns are used widely.

Moreover, in the error diffusing, even one different pixel results in a completely different dot arrangement pattern. Therefore, an additional process such as a process of overlapping a white noise is effective to suppress the number of the 3K dots.

Furthermore, even if input data is R=G=B, the converted data, i.e., output data cannot always be C=M=Y as a result of the CMM process or the γ correction. In some cases, the numbers of the C dots, the M dots, and the Y dots per unit area are different from each other. The unequal numbers may result in fluctuation in the gray balance, which may decrease the quality of the image.

Still moreover, because no gray balance fluctuation is acceptable in forming of a monochrome image, a monochrome image is generally reproduced with the real black only at various tones. This configuration is likely to cause the color inks near the nozzles dry and the nozzles of the color recording heads to clog. To prevent the color-ink nozzles from clogging, it is necessary to frequently perform the maintenance operation. However, the frequent maintenance decreases the recording speed because of the maintenance operation, and increases the recording costs because of an increase in the usage of ink for the maintenance.

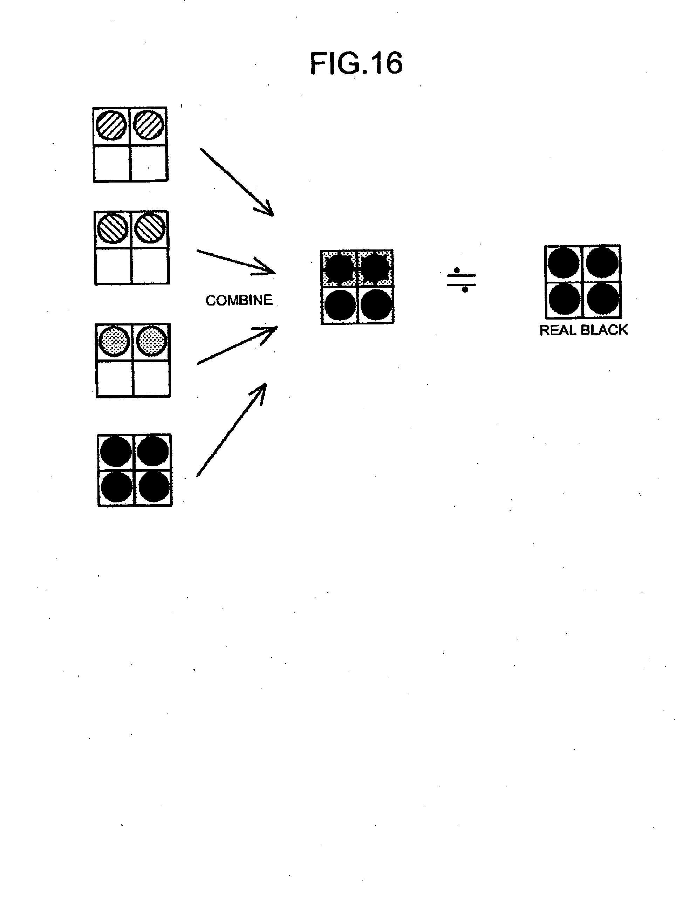

The image processing method according to the embodiment can solve the problems. In the image processing, even if the received image is black, the image is formed with the black ink and with the color ink. In other words, as shown in Fig. 16, if the received image is black, the image is formed with the black ink and at least one of the color inks, so that the nozzles of the color recording heads are prevented from clogging. In the example shown in Fig. 16, the composite black that is reproduced by combining all the CMY colors is used, which prevents forming of the bluish black dot, the reddish black dot, etc. and looks the composite black like the real black.

In this example, the black image is formed with the black ink and at least one of the color inks. A usage of the black ink per unit area is set from 40% to 100% of a usage of the black ink per unit area that is measured assuming a case where the image is formed with only the black ink at the same density (hereinafter, "reference usage"). A usage of the color ink per unit area is set from 2% to 20% of the reference usage. The black dot and the color dot are formed at the same position. Such setting of the usages of the black ink and the color ink to a percentage within the ranges makes the image in the composite black looks like the image in the real black.

Still more particularly, the black image is formed with the black ink and at least one of the color inks. The total usage of the black ink and the color ink per unit area is set from 80% to 130% of the reference usage. The black dot and the color dot are formed at the same position. Such setting of the total amount to a percentage within the range makes the image in the composite black looks like the image in the real black.

Furthermore, the black image is formed with the black ink and at least one of the color inks in such a manner that a different between the density of the formed image and the density of the image that is measured assuming a case where the image is formed with only the black ink is set within ±10%. The black dot and the color dot are formed at the same position. Such setting of the difference between the densities to a percentage within the range makes the image in the composite black looks like the image in the real black.

Still furthermore, at the 90% tone or higher, the color dots can be arranged on the 1/4 or larger number of positions of the K dots. As described above, the first resolution by using the recording heads 7k1 and 7k2 for the black ink is set twice as high as the second resolution by using the recording heads 7y, 7m, and 7c for the color inks (i.e., n=2). Therefore, the color dots can be arranges on the positions of the K dots as much as 1/(2×n), where n is the resolution by using the series of nozzles via which the black ink is ejected/the resolution by using the series of nozzles via which the color inks are ejected, and n>1.

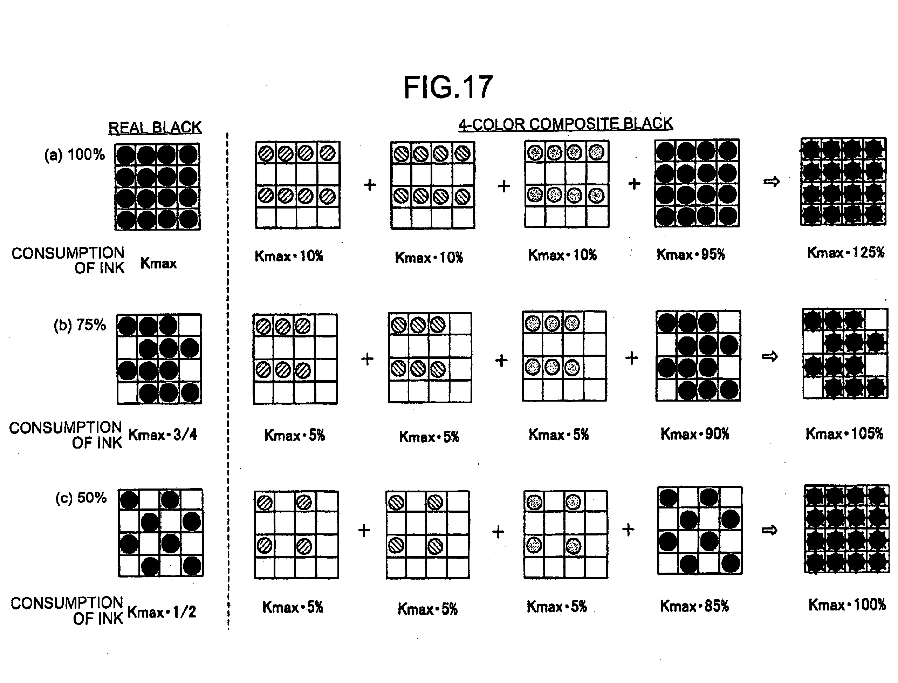

Examples are described with reference to Fig. 17. A case (a) shown in Fig. 17 is a 100% black, a case (b) is a 75% black, a case (c) is a 50% black.

If the image is formed with the real black, the arranged dots occupy 1/2 with the usage of the ink being the maximum amount (hereinafter, "Kmax") in the example of the 100% black, 6/16 with the usage of the ink being Kmax·3/8 in the example of the 75% black, and 1/4 with the usage of the ink being Kmax·1/4 in the example of the 50% black.

In contrast, if the image is formed with the 4-color composite black, although the occupation of the arranged dots is equal to the occupation with the real black, the usage of the CMY inks is Kmax·10%, the usage of the black ink is Kmax·95%, and the total usage of the CMYK inks is Kmax·125% in the example of the 100% black. In the example of the 75% black, the usage of the CMY inks is Kmax·5%, the usage of the black ink is Kmax·90%, and the total usage of the CMYK inks is Kmax·105%. In the example of the 50% black, the usage of the CMY inks is Kmax·5%, the usage of the black ink is Kmax·85%, and the total usage of the CMYK inks is Kmax·100%.

In the examples shown in Fig. 17, because the black is reproduced with the overlapped CMYK dots only, the hue of the reproduced black is fixed to the hue of the composite black dot, and therefore the gray balance is fixed in any tone levels. If the black image to be reproduced is a part of a color image, because the image data of the black image is subjected to the CMM process and the γ correction as described above, an undesired dot other than the overlapped CMYK dot, such as a dot in the primary color of the CMYK or a dot in the secondary color of the RGB, may be included. However, because the original data is R=G=B, a ratio of the undesired dots to the total dots cannot be high enough to affect the black hue.

In this manner, to reproduce black by using the black recording head that ejects the black ink from the series of nozzles at the first resolution and the color recording head that ejects the color inks from the series of nozzles at the second resolution, the following manner is considered. The black image is formed with the ink combined the black ink with at least one of the color inks. In the forming of the black image, the usage of the black ink per unit area is set from 40% to 100% of the reference usage. The usage of the color ink is set from 2% to 20%. The black dot and the color dot are formed at the same position. Alternatively, the black image is formed with the ink combined the black ink with at least one of the color inks. In the forming of the black image, the total usage of the black ink and the color ink per unit area is set from 80% to 130% of the reference usage. The black dot and the color dot are formed at the same position. Still alternatively, the black image is formed with the ink combined the black ink with at least one of the color inks. In the forming of the black image, the different between the density of the formed image and the density of the image that is measured assuming a case where the image is formed with only the black ink is set within ±10%. The black dot and the color dot are formed at the same position. With these configurations, uneven color because of a shift of dot distribution is less likely to occur, and therefore it is produced the image in black having a uniform hue with the total usage of ink 130% as much as the reference usage or lower. Moreover, because the color ink is used to form the black image, the effect substantially same as the maintenance ejection is obtained, which prevents the color-ink nozzles from clogging.

Moreover, if the total usage of the black ink and the color ink is set equal to the reference usage, the effect of preventing the nozzles from clogging is obtained without an increase in costs for ink.

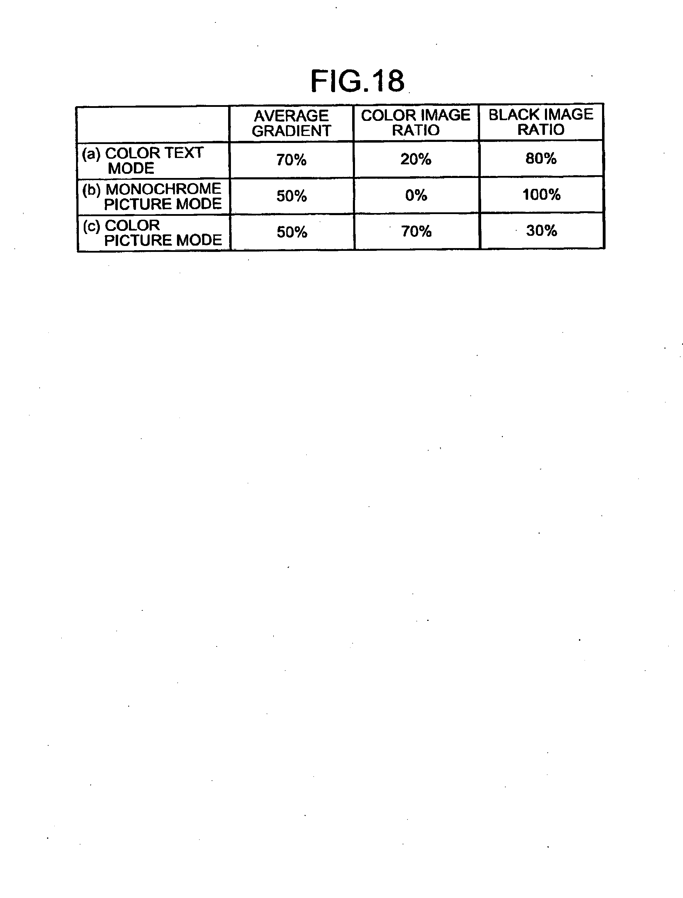

In the image processing method according to the embodiment, it is preferable to change the dot arrangement depending on a ratio of a black image area to a total area (hereinafter, "black image ratio"). For example, as shown in Fig. 18, the black image ratio of a color text mode in which both color images and monochrome images are always included, the black image ratio of a monochrome picture mode, and the black image ratio of a color picture mode are different from each other. In the color text mode including color texts, an average gradient is 70% and the ratio of the color image area to the total area (hereinafter, "color image ratio") is 20%, and the black image ratio is 80%. In the monochrome picture mode, the average gradient is 50% and the color image ratio is 0%, and the black image ratio is 100%. In the color picture mode, the average gradient is 50% and the color image ratio is 70%, and the black image ratio is 30%.

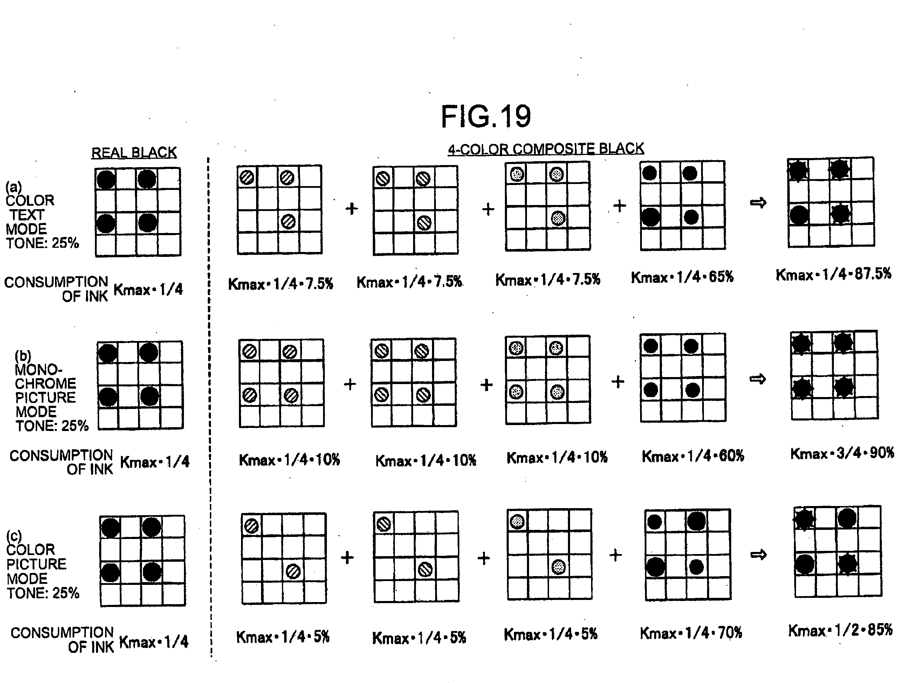

The different dot arrangement patterns (differentiated in the number of dots) shown in Fig. 19 are used corresponding to the black image ratios in those modes. An example of the color text mode (25% tone) is shown in (a) of Fig. 19. An example of the monochrome picture mode (25% tone) is shown in (b) of Fig. 19. An example of the color picture mode (25% tone) is shown in (c) of Fig. 19.

When the real black is used, the number of arranged dots is set to four and the usage of ink is set to Kmax·1/4 in all of the color text mode, the monochrome picture mode, and the color picture mode.

When the 4-color composite black is used in the color text mode, the number of arranged CMY dots is set to three, the usage of the CMY inks is set to Kmax·1/4·7.5%, the number of arranged K dots is set to four, the usage of the black ink is set to Kmax·1/4·65%, and the total usage of the CMYK inks is set to Kmax·1/4·87.5%.

In the monochrome picture mode, the number of arranged CMY dots is set to four, the usage of the CMY inks is set to Kmax·1/4·10%, the number of arranged K dots is set to four, the usage of the black ink is set to Kmax·1/4·60%, and the total usage of the CMYK inks is set to Kmax·1/4·90%. In the monochrome picture mode having the black image ratio of 100% higher than that in the color text mode, the color ink is, in general, less likely to be used, which likely to cause the color recording head to clog. Taking these conditions into consideration, the ratio of the color dots is set higher than the ratio in the color text mode, which effectively prevents the nozzles of the color recording head from drying.

In the color picture mode, the number of arranged CMY dots is set to two, the usage of the CMY inks is set to Kmax·1/4·5%, the number of arranged K dots is set to four, the usage of the black ink is set to Kmax·1/4·70%, and the total usage of the CMYK inks is set to Kmax·1/4·85%. In the color picture mode having the black image ratio lower than that in the color text mode and the color image ratio higher than that in the color text mode, the usage of the black ink is lower than the usage of the black ink in the color text mode, and therefore the recording head for the black ink is more likely to clog. Therefore, the usage of the black ink is set higher, which effectively prevents the nozzles of the recording head for the black ink from clogging.

In this manner, because an extent of the clogging prevention effect depends on the type of the image, the usage of the ink and/or the position at which the dot is arranged are set appropriately on the mode basis. Alternatively, the usage of the ink and/or the position at which the dot is arranged are set appropriately by referring to an object of the received image data. Moreover, if the color dots other than the black dot occupy an area half of an area of the black dots or larger at 90% or higher tone, the nozzles can always maintain the unclogged state.

Adjusting the usage of the ink and/or the position at which the dot is arranged according to the black image ratio allows the nozzles to always maintain the unclogged state.

As described above, the image data of each color individually undergoes the processes performed by the CMM processing unit 412, the γ-correction unit 415, and the halftone processing unit 416. Because the quality of the black image is free from the manner of arranging the CMY dots, usage of a process of arranging same-sized CMY dots at the same position or a process of arranging the CMY dots by using the same dither mask (i.e., the same dither matrix) makes it possible to reduce a load caused by the data processing with preventing the nozzles from clogging.

In some cases, putting the C, M, Y, and K dots at the same position causes a disadvantageous result, for example, a grainy image because a dot that is formed by mixing the black and the color is noticeable in a light tone close to white. An excellent image with a low graininess is formed by skipping the process of adjusting the dots to the same position in an area of a picture image where the tone level is closer to white. The low graininess can be prior to the uniform black hue, specifically, in the color picture. To form an excellent image with preventing the nozzles from drying, it is effective to switch, by referring to an instruction that is received from outside, the process of adjusting the dots to the same position to active or inactive when the black is reproduced.

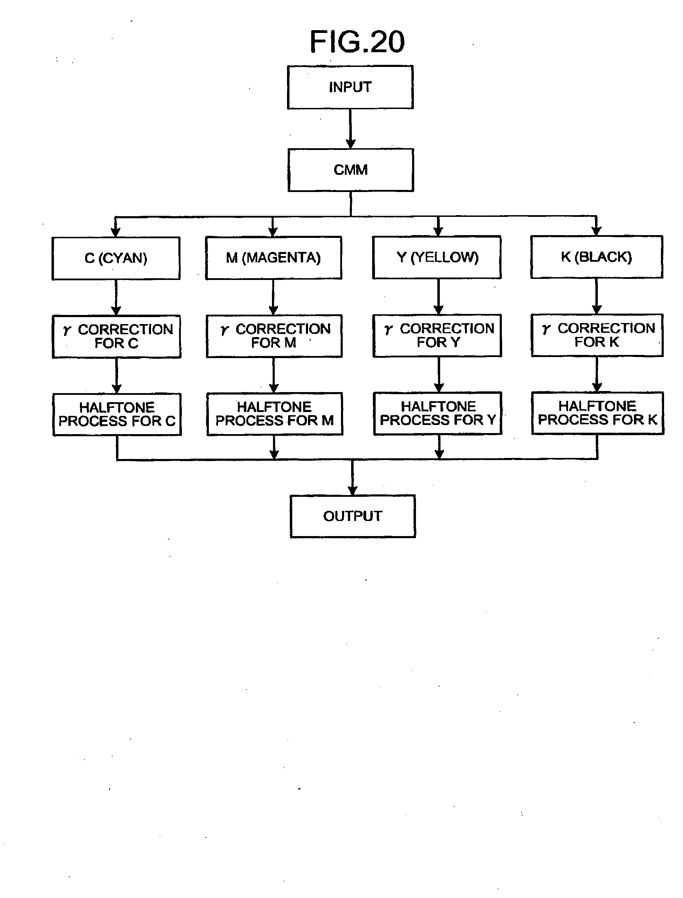

The image processing method according to the embodiment is described as compared with the conventional image processing method with reference to Figs. 20, 21, and 22.

The conventional image processing method is described with reference to Fig. 20. In the conventional image processing method, the process of adjusting the CMYK dots to the same position is not performed. The input data is converted to the cyan data, the magenta data, the yellow data, and the black data through the image processing such as the CMM process. The C, M, Y, and K data is individually subjected to the γ correction and the halftone process. The processed C, M, Y, and K data are then output. In this manner, because the C, M, Y, and K data undergoes the halftone process individually, the memory load and the data processing load are high.

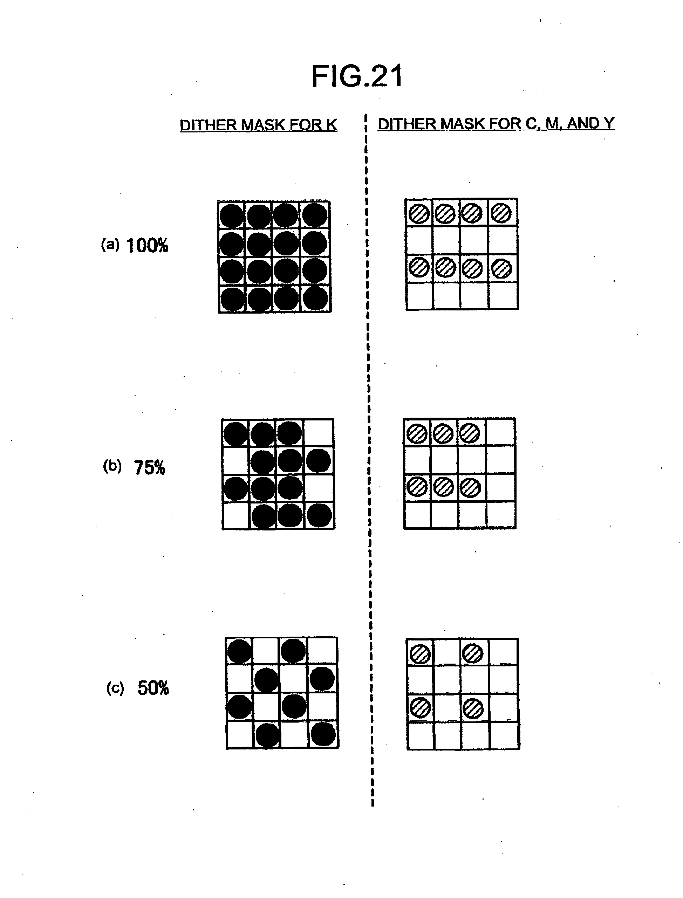

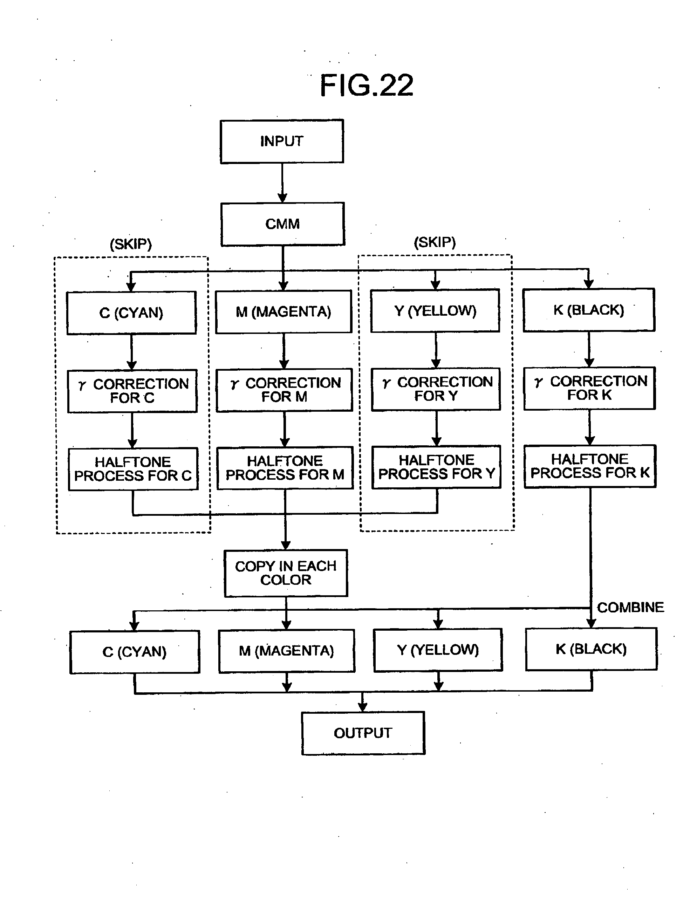

The image processing method according to the embodiment is described with reference to Figs. 21 and 22. In the image processing method according to the embodiment, the C, M, Y, and K dots are arranged to the same position as a result of the dithering that is a part of the halftone process.

In the dithering, the dots are reproduced at positions that are defined by a threshold matrix. As shown in Fig. 21, all of the C data, the M data, and the Y data use a single dither mask, so that the C, M, and Y dots are arranged to the same positions. It is noted that, because the resolution by using the series of nozzles that eject the CMY inks is half of the resolution by using the series of nozzles that eject the black ink, the resolution in the sub-scanning direction in the CMY arrangements is half of the resolution in the K arrangement. That is, first lines on which the CMY dots can be formed and second lines on which the CMY dots cannot be formed are arranged, alternatively in the sub-scanning direction. Therefore, the dither mask in which the CMY dots are arranged other than the second lines is used to form the 4K dot (dot formed with the overlapped CMYK dots).

To put it plainly, as shown in Fig. 22, the input data is converted to the cyan data, the magenta data, the yellow data, and the black data through the image processing such as the CMM process. The C, M, Y, and K data is individually subjected to the γ correction. After that, the C data, the M data, and the Y data are subjected to the halftone process by using the same dither matrix. The K data is subjected to the halftone process by using the dedicated dither matrix. The processed C, M, Y, and K data are then output.

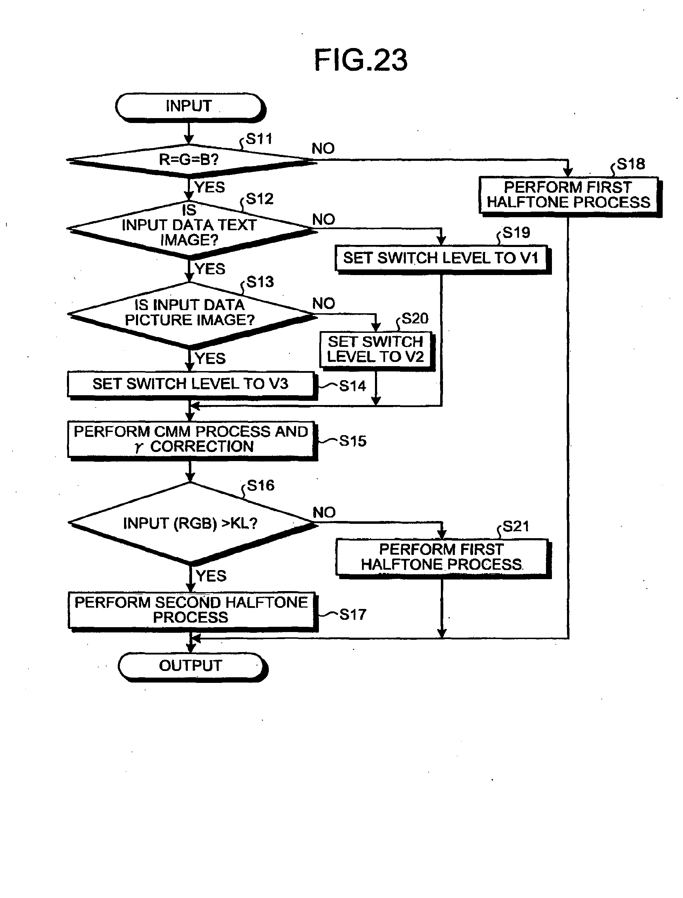

The image processing according to the embodiment is described with reference to the flowchart shown in Fig. 23. Whether the received image data includes an R input, a G input, and a B input having the equal amount (R=G=B) is determined (Step S11). If the R input, the G input, and the B input are unequal (No at Step S11), which means that the received image data is color, a first halftone process is performed (Step S18). In the first halftone process, the C data, the M data, the Y data, and the K data are individually subjected to the halftone process in the same manner as in the conventional image processing that is described with reference to Fig. 20.

If the received image data is a monochrome image or if the received image data is a color image including an black image with the R input, the G input, and the B input being equal (Yes at Step S11), a second halftone process is performed (Step S19). In the second halftone process, the 4K dot is formed in the same manner as in the image processing that is described with reference to Fig. 22.

More particularly, if the received image data is a monochrome image or if the received image data is a color image including an black image with the R input, the G input, and the B input being equal (Yes at Step S11), it is determined whether the image is a text image (Step S12). If the image is not a text image (No at Step S12), a switch level KL is set to V1 (Step S19). If the image is a text image (Yes at Step S12), it is determined whether the image is a picture image (Step S13). If the image is not a picture image (No at Step S13), the switch level KL is set to V2 (Step S20). If the image is a picture image (Yes at Step S13), the switch level KL is set to V3 (Step S14). After that, the CMM process and the γ correction are performed (Step S15). The switch level KL is a fixed value, reflecting the black image ratio. The values of the switch level KL are unique to the types of the image. It is determined by referring to the switch level KL whether the usage of the ink and/or the position at which the dot is arranged is to be switched.

It is determined whether the input values (RGB) is larger than the switch level KL (RGB>KL) (Step S16). If the input values (RGB) is larger than the switch level KL (Yes at Step S16), the second halftone process is performed (Step S17). If the input values (RGB) is equal to or smaller than the switch level KL (No at Step S16), the first halftone process is performed (Step S21). The data processed at Step S17, S18, or S21 is output.

The C ink, the M ink, the Y ink, and the K ink can be any type of ink, for example, pigment-based ink, dye-based ink, ink prepared suitable for plain paper, and ink prepared suitable for specific paper (including gross paper). Moreover, the type of the CMK inks can be either the same as or different from the type of the K ink.

As described above, in the image processing method according to the embodiment, it is effective to change the printing conditions according to a combination of the type of the inks and the type of the recording medium. Therefore, it is preferable to configure the image forming to automatically switch the printing conditions, if information about the combination of the inks and the recording medium is acquired before printing, or if a sheet-type determining unit included in the image forming apparatus determines that the image processing method according to the embodiment is effective for the determined type. The image forming apparatus reproduces black corresponding to the recording mode that is decided automatically from the type of the recording medium and the recording method by using the most-suitable image processing. This relieves the user of the bother of selecting.

The type of black selected by the user can be different from the type of black selected by the image forming apparatus. For example, the user may prefer the normal composite black to the 4-color composite black. To satisfy various needs, the image forming system can be configured to include a unit that allows switching the image processing to active or inactive by referring to an instruction received from the user.

The unit that allows switching the image processing to active or inactive by an instruction received from outside can be included in either the image forming apparatus or the host apparatus (the information processing apparatus or the image processing apparatus). In the image forming apparatus, for example, the unit is connected to the control panel. Alternatively, the unit is included in the host apparatus in such a manner that the user can select the type of black on a setting screen of a printing mode by the printer driver.

The entire steps of the image processing method can be performed on the computer by executing the image processing program (printer driver) as shown in Fig. 11. Alternatively, as shown in Fig. 12, some steps can be performed on the computer as the software processing, and the other steps can be performed by the image forming apparatus as the hardware processing. Still alternatively, the entire steps can be performed by the image forming apparatus as the hardware processing.

Although the black image is formed with both the K ink and the CMY inks in the embodiment, the black image can be formed with the K ink and one of the CMY inks. If the size of the ink droplet to be ejected is selectable from among various sizes, the droplet of the color ink is preferably set smaller than the droplet of the black ink at each ejection (if the black ink is the smallest size, the color ink is set equal to the black ink). This is effective for preventing the nozzles from clogging.

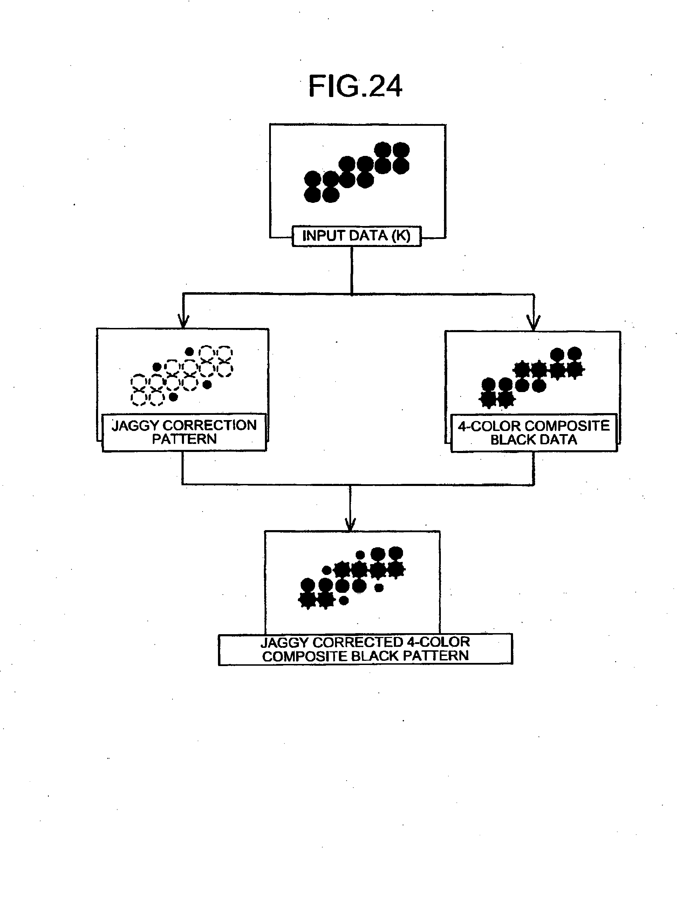

A jaggy-correction process of correcting a step-like pattern of a character to reproduce the character in black is described with reference to Fig. 24 according to the embodiment.

In the example shown in Fig. 24, the input data representing a character in black undergoes both the 4-color composite black generating process and the jaggy correction process. After that, the jaggy corrected 4-color composite black data is generated by combining the data that is subjected the 4-color composite black generating process and the data that is subjected the jaggy correction process. The jaggy corrected the 4-color composite black data makes the image forming apparatus to form a more sophisticated character with the stable ejection.

The jaggy correction pattern can be formed with dots in the real black (by using the K ink only) or dots in the 4-color composite black. The single pattern can be used as the jaggy correction pattern for the 4-color composite black and the single-color character. Alternatively, the jaggy correction pattern dedicated to the 4-color composite black can be prepared. If the different jaggy correction patterns are used corresponding to the type of the character, i.e., either the single-color character or the 4-color composite black character, it is possible to emphasize, in the single-color character, an outline of the character and suppress, in the 4-color composite black character, a gap in color between an outline section and a character section.

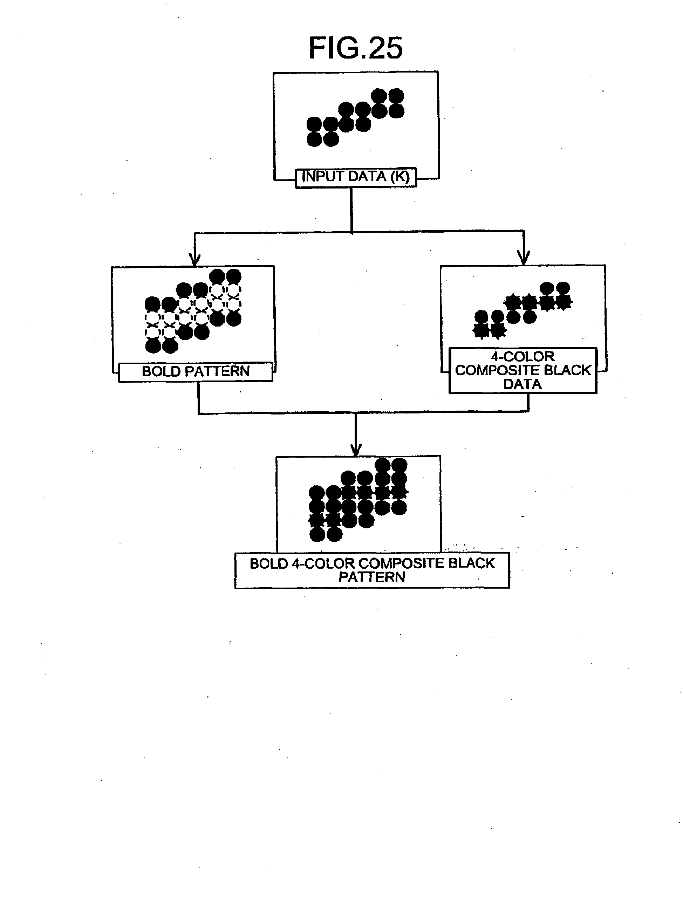

A bold process of setting the 4-color composite black character bold is described with reference to Fig. 25.

The data representing the bold character in the 4-color composite black is generated by using a bold pattern as the jaggy correction pattern for the 4-color composite black. The bold character has an advantage in legibility even at a low density, as compared with the character in the K ink only.

The bold pattern can be formed with dots in the real black (by using the K ink only) or dots in the 4-color composite black. The single bold pattern can be used as the jaggy correction pattern for the 4-color composite black and the single-color character. Alternatively, the bold pattern dedicated to the 4-color composite black can be prepared.

The bold process can be switched between or set to active/inactive by an instruction received from the user. Moreover, the bold process can be switched automatically between active and inactive according to a size of the character. For example, if the character is 6 points or smaller in size, the bold process is switched to inactive. This is because the bold character in such a small point is difficult to recognize because of ink blur. A threshold by comparing with which whether the bold process is to be performed is determined can be set or instructed by the user.

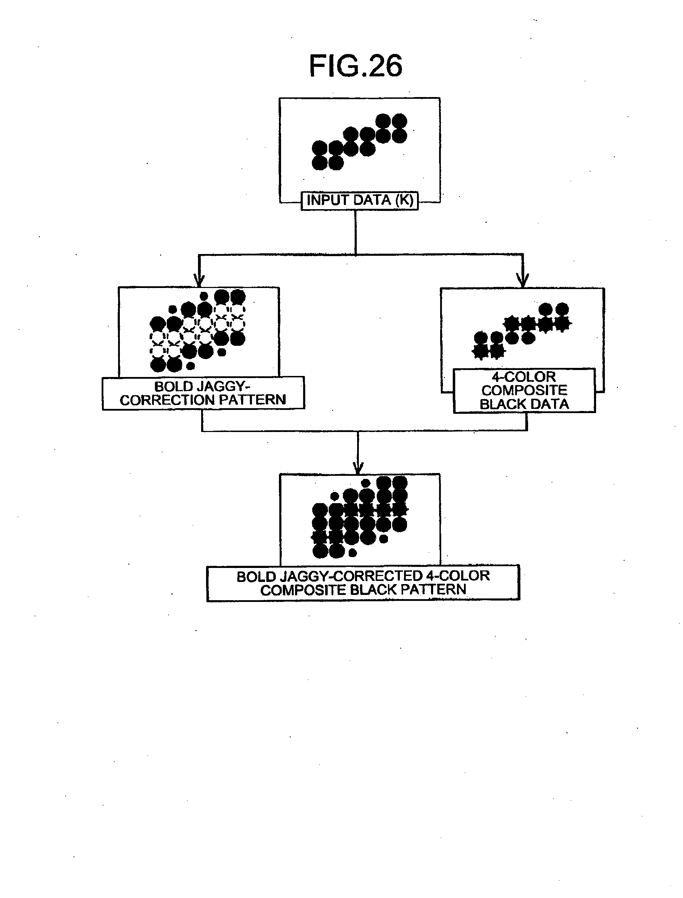

A bold/jaggy-collection process of generating a jaggy-corrected bold character in the 4-color composite black is described with reference to Fig. 26.

In the example shown in Fig. 26, the data representing the jaggy-corrected bold character in the 4-color composite black is generated by using a bold/jaggy-correction pattern for the 4-color composite black. The bold/jaggy-collection process causes the processed character to look more sophisticated with a higher legibility.

The bold/jaggy-correction pattern can be formed with dots in the real black (by using the K ink only) or dots in the 4-color composite black. The single pattern can be used as the bold/jaggy-correction pattern for the 4-color composite black and the single-color character. Alternatively, the bold/jaggy-correction pattern dedicated to the 4-color composite black can be prepared.

The bold/jaggy-correction process can be switched between or set to active/inactive by an instruction from the user. Moreover, the bold/jaggy-correction process can be switched to active or inactive according to a size of the character. As described above, if the character is 6 points or smaller in size, the bold/jaggy-correction process is switched to inactive. This is because the bold character in such a small point is difficult to recognize because of ink blur. The threshold by comparing with which whether the bold process is to be performed is determined can be set or instructed by the user.

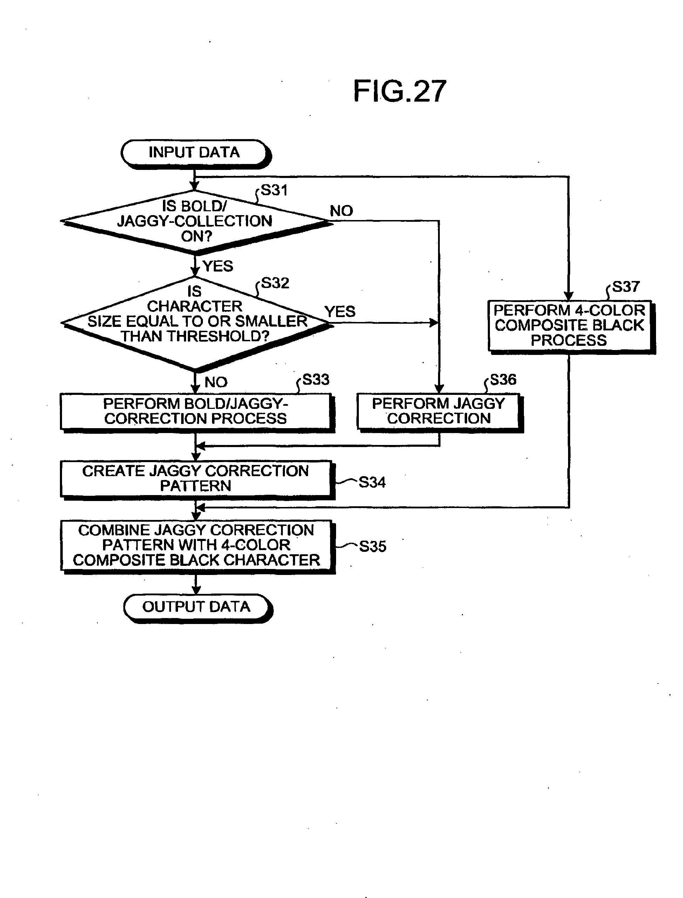

The image processing including the jaggy correction process, the bold process, and the bold/jaggy-correction process is described with reference to the flowchart shown in Fig. 27.

The input data undergoes the 4-color composite black process (Step S37).

In parallel with Step S37, it is determined whether the bold/jaggy-collection is to be performed (i.e., whether the bold/jaggy-collection is ON or OFF) (Step S31). If the bold/jaggy-collection is OFF (OFF at Step S31), the jaggy correction pattern is generated by using the simple jaggy correction process (Step S36). On the other hand, if the bold/jaggy-collection is ON (ON at Step S31), it is determined whether the size of the character is equal to or smaller than the threshold (for example, 6 points) (Step S32). If the size of the character is equal to or smaller than the threshold (Yes at Step S32), because the character is preferable to be remained in a non-bold state, the jaggy correction pattern is generated by using the simple jaggy correction process (Step S36). On the other hand, if the size of the character is larger than the threshold size (No at Step S32), the bold/jaggy-correction pattern is generated by using the bold/jaggy-correction process (Step S33). Thus, the jaggy correction pattern is generated (Step S34).

After that, the output data is generated by combining the pattern of the 4-color composite black character and the generated jaggy correction pattern (Step S35).

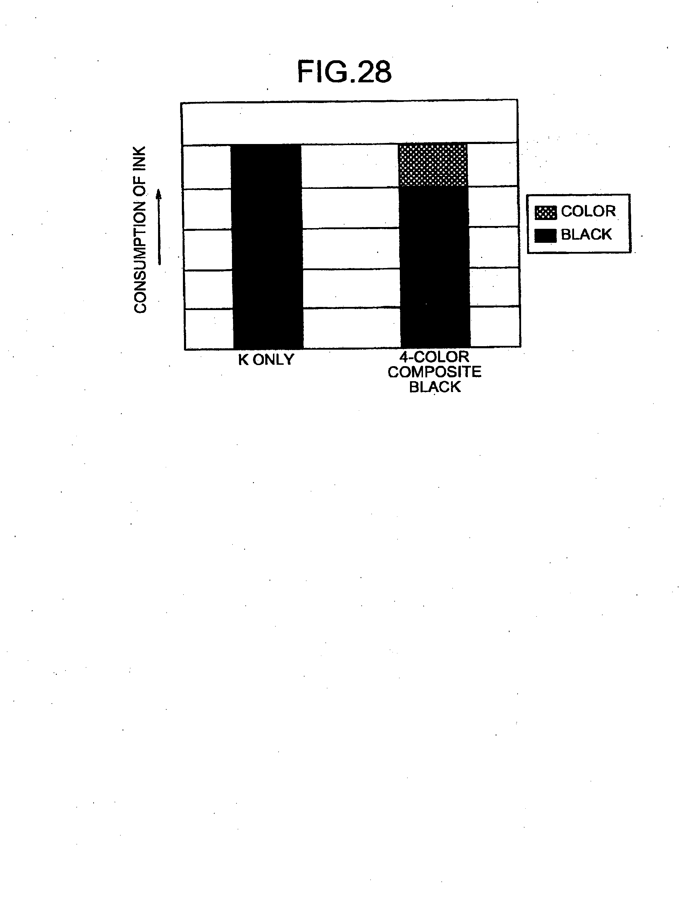

The usage of ink when the jaggy correction process is performed is described with reference to Fig. 28. The usage of the K ink when the image is formed with the 4-color composite black is lower than the usage of the K ink when the image is formed with the K ink only, so that the total of usages of the CMYK inks when the image is formed with the 4-color composite black is equal to or lower than the usage of the K ink when the image is formed with the K ink only. In other words, the more sophisticated character with the higher legibility is formed without an increase in the usage of ink.

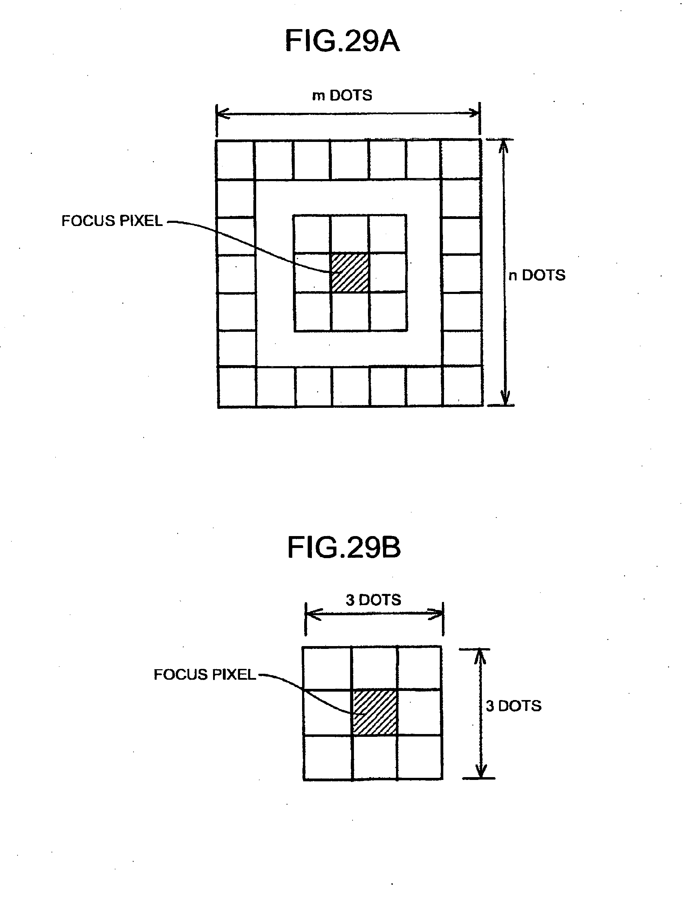

The jaggy correction process, the bold process, and the bold/jaggy-correction process are described in details with reference to Figs. 29A to 43. The dots shown in Figs. 29A to 43 are represented by a white circle and a black circle, and are not represented by the marks shown in Fig. 13.

Pattern matching is used as an approach to adding any of a large droplet, a medium droplet, a small droplet beside or under the dot forming the character in the manner similar to the jaggy correction. The pattern matching has an advantage in the processing speed.

Fig. 29A is a schematic diagram of a window W that is used for the pattern matching. The window W includes m dots in width and n dots in length (in total of m dotsxn dots). In the example shown in Fig. 29A, m is equal to n, more particularly as shown in Fig. 29B, m and n are three, each.

Character font data is the printer driver software. The character font data is loaded as bitmap data. The bitmap data represents dots forming a font. The font data as the bitmap data is subjected to the pattern matching on the window basis.

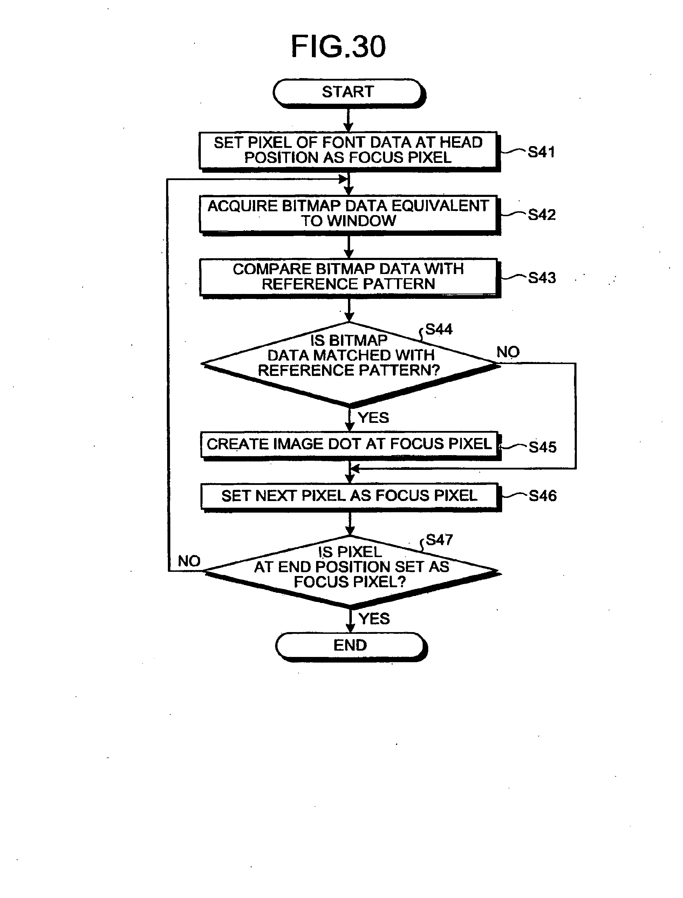

The pattern matching in a first bold process is described with reference to Fig. 30.

A pixel of the font data at a head position is set as a focus pixel (Step S41). A part of the font data in the form of the bitmap data equivalent to the window is acquired in such a manner that the acquired bitmap data includes the focus pixel at the center (Step S42). The acquired bitmap data includes 9 dots (3 dots×3 dots). The acquired data is compared with data about a predetermined pattern for adding an image dot (hereinafter, "reference pattern") by using the pattern matching (Step S43). If the acquired bitmap data is matched with the reference pattern (Yes at Step S44), the focus pixel is replaced with data about the image dot of the large droplet (or the medium droplet) (Step S45). The next pixel is set as the focus pixel (Step S46). The control process repeats Steps S42 to S46 until a pixel at the end position is set as the focus pixel. When the pixel at the end position is set as the focus pixel (Yes at Step S47), the control process goes to end.

The pattern matching in the first bold process can be performed assuming that one pixel is 1-byte data or 1-bit data. If the one pixel is assumed to be 1-byte data, 9-byte data is required for representing 9 dots. If the one pixel is assumed to be 1-bit data, only 2-byte data is required for representing 9 dots. Therefore, it is preferable to assume one pixel as 1-bit data from the viewpoint of reduction of the required memory capacity and improvement of the processing speed.

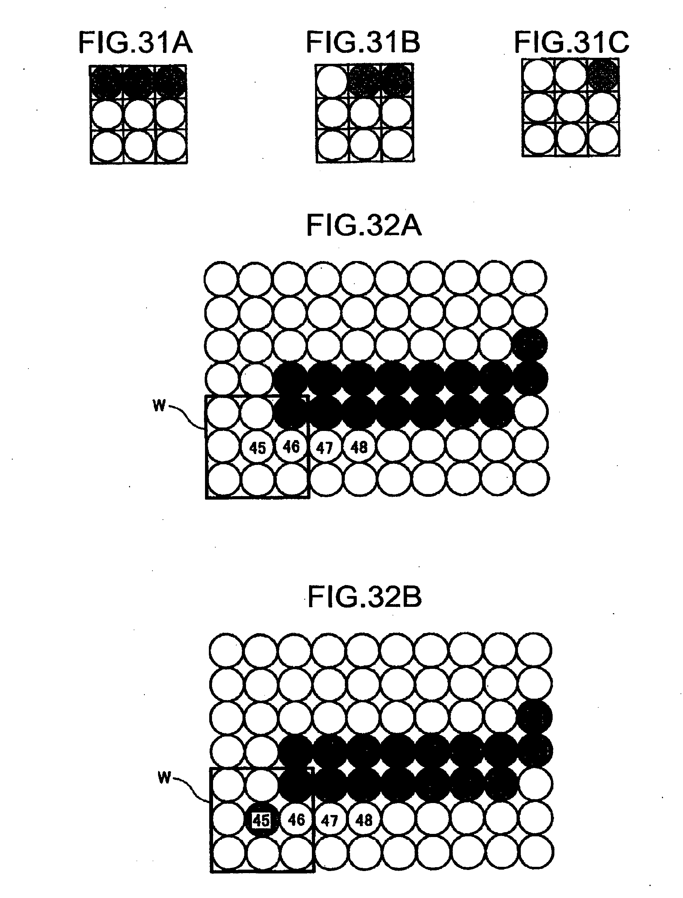

The pattern matching in the first bold process is described in details with reference to Figs. 31A to 31C and 32A to 32B. Figs. 31A to 31C are schematic diagrams of the reference patterns. When the font data shown in Fig. 32A is compared with the reference patterns by the pattern matching, it is determined that, when a pixel D45 is set as the focus pixel, a dot pattern of the window W is matched with the reference pattern shown in Fig. 31C. Therefore, blank data in the focus pixel D45 is replaced with the image dot data as shown in Fig. 32B.

The window W moves right by one, and a pixel D46 is set as the focus pixel. A pattern of the window W including the focus pixel D46 is matched with the reference pattern shown in Fig. 31B. Therefore, the blank data in the focus pixel D46 is replaced with the image dot data, in the same manner as in the pixel D45. After that, the window W moves right by one, and a pixel D47 is set as the focus pixel. A pattern of the window W including the focus pixel D47 is matched with the reference pattern shown in Fig. 31A. Therefore, the blank data in the focus pixel D47 is replaced with the image dot data.

If, in generation of the image dot data, the original font data is represented by 0 (blank) and 255 (print data) as in the same manner in the bitmap data, the target blank data "0" is changed to the image dot data "255". Alternatively, if the original font data is represented by binary values including 0 (blank) and 1 (print data), the target blank data "0" is changed to the image dot data "1".

The bold character is formed by printing the large droplet (or the medium droplet or the small droplet) based on the font data including data representing the large droplet that is generated as a resultant of the pattern matching (the former case) or based on the binary data (0, 1) for the small droplet and the original binary font data (0, 1) that are generated as a resultant of the pattern matching (the latter case).

Although the dot of the large droplet is added in the sub-scanning direction in the example shown in Figs. 31A to 31C and 32A to 32B, it is allowable to add a dot having a different size to a different position. For example, to add a dot of the medium droplet (or the small droplet) in the sub-scanning direction and a dot of the large droplet in the main-scanning direction, the pattern matching for adding a dot in the sub-scanning direction and the pattern matching for adding a dot in the main-scanning direction are performed individually by using the reference patterns that are generated individually. Thus, it is possible to add dots having various sizes according to a position to be added, i.e., the sub-scanning direction or the main-scanning direction.

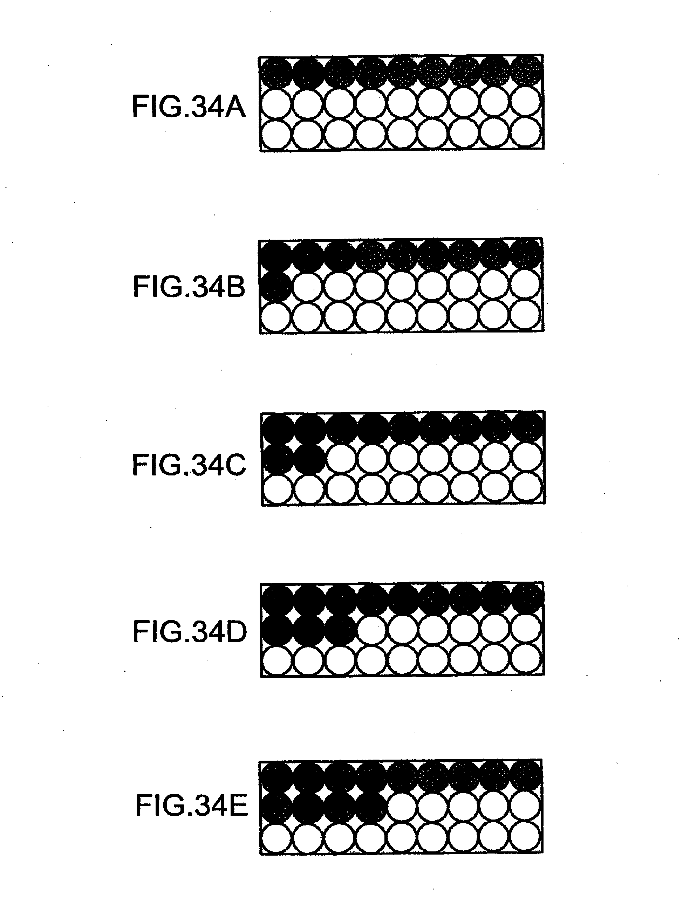

A second bold process by using the jaggy correction is described. As described above, the high processing speed is obtained by using the pattern matching as an approach to adding any of the large droplet, the medium droplet, and the small droplet beside or under the dot forming the character. As described above, the window W includes m dots in width and n dots in length (in total of m dotsxn dots). In the example, only lines nearly parallel to the main-scanning direction are subjected to the jaggy correction, while lines nearly parallel to the sub-scanning direction are not subjected to the jaggy correction. The value of m is set larger than the value of n, so that a step-like pattern formed with lines nearly parallel to the main-scanning direction and a blank dot adjacent to the step-like pattern can be detected efficiently. In the windows shown in Figs. 34A to 34E, m is 9 and n is 3.

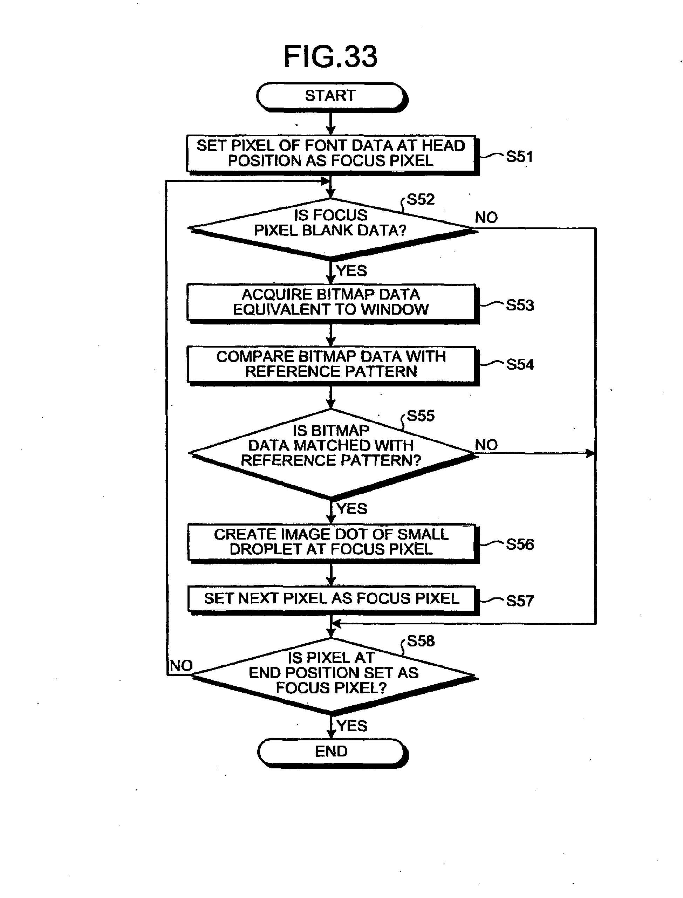

The second bold process is described with reference to Fig. 33. A pixel of the font data at a head position is set as the focus pixel (Step S51). If the focus pixel is blank data (Yes at Step S52), a part of the font data in the form of the bitmap data equivalent to the window is acquired in such a manner that the acquired bitmap data includes the focus pixel at the center (Step S53). Thus, the acquired bitmap data includes 27 dots (9 dots×3 dots). The acquired data is compared with data about the reference pattern for adding a small droplet or replacing the focus pixel with a small droplet by using the pattern matching (step S54). If the acquired data is matched with the reference pattern (Yes at Step S55), the focus pixel is replaced with data about the image dot of the small droplet (Step S56). The next pixel is set as the focus pixel (Step S57). The control process repeats Steps S52 to S57 until a pixel at the end position is set as the focus pixel. When the pixel at the end position is set as the focus pixel (Yes at Step S58), the control process goes to end.

The pattern matching in the second bold process can be performed assuming that one pixel is 1-byte data or 1-bit data. If the one pixel is assumed to be 1-byte data, 27-byte data is required for representing 27 dots. If the one pixel is assumed to be 1-bit data, only 4-byte data is required for representing 27 dots. Therefore, it is preferable to assume one pixel as 1-bit data from the viewpoint of reduction of the required memory capacity and improvement of the processing speed.

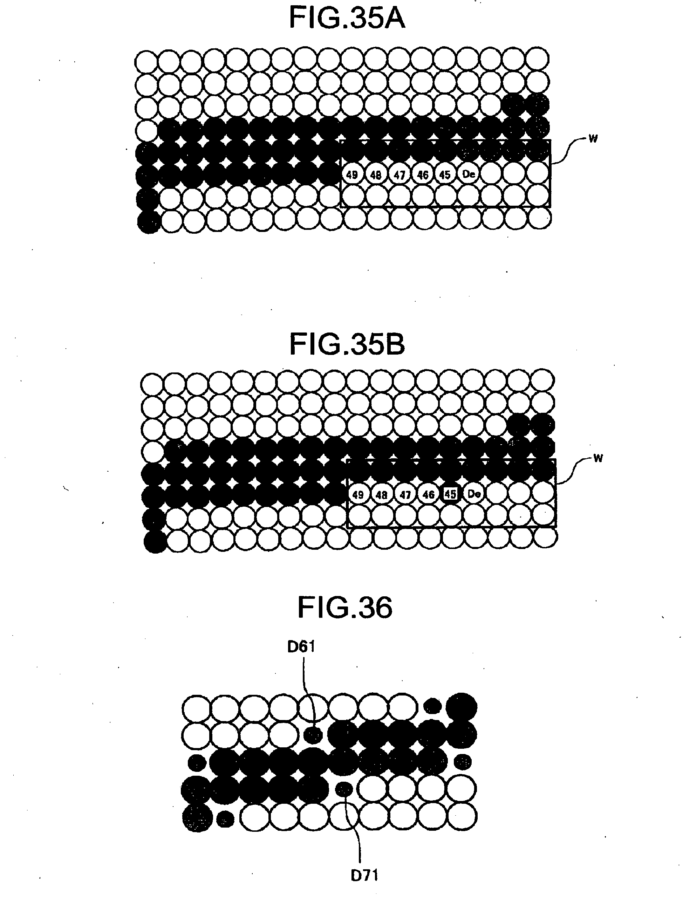

The pattern matching in the second bold process is described in details with reference to Figs. 34A to 34E and 35A to 35B. Figs. 34A to 34E are schematic diagrams of the reference patterns. When the font data shown in Fig. 35A is compared with the reference pattern by the pattern matching, it is determined that, when the pixel D45 is set as the focus pixel, a dot pattern of the window W shown in Fig. 35A is matched with the reference pattern shown in Fig. 34A. Therefore, blank data in the focus pixel D45 is replaced with the image dot data as shown in Fig. 35B.

If, in generation of the small droplet data, the original font data is represented by 0 (blank) and 255 (print data) as in the same manner in the bitmap data, after the target blank data "0" is changed to the image dot data "255", the blank data or the data forming the font can be replaced with data representing the small droplet (e.g., "85"). Alternatively, if the original font data is represented by binary values including 0 (blank) and 1 (print data), a small-droplet data memory in which the small droplet data is to be stored having the size equal to that of the font data is prepared. The data "1" representing the print data is stored in the small-droplet data memory corresponding to the target position. The bold character is formed by printing the small droplet and the large droplet based on the font data including data representing the small droplet and the large droplet that are generated as a resultant of the pattern matching (the former case) or based on the binary data (0, 1) for the small droplet and the original binary font data (0, 1) that are generated as a resultant of the pattern matching (the latter case).

In this manner, it is determined, by using the 9 dots×3 dots-sized window W and the reference patterns, whether the blank data (if all the dots are set to be the focus pixel, the bland data and the image dot data) representing any of four dots adjacent to a point of variation is to be replaced with the small droplet. The four pixels adjacent to the point of variation are subjected to the determination. This is because, for example, if a pixel De shown in Fig. 35A is set as the focus pixel, the point of variation cannot be detected because the point of variation is out of the window W. To detect the point of variation and add the small droplet at the pixel De, it is necessary to increase the size of the window W and the reference patterns to an 11 dots×3 dots size or larger.

To put it plainly, the larger window and the larger reference patterns make the detection of a point of variation on a line nearly parallel to the longitudinal line or the latitudinal line more effective, which makes it possible to form a smoother line by adding the small droplet according to the detected angle of the line. In other words, the size of the window and the reference patterns is decided properly, not limited to the above-described sizes, in consideration of a degree of the detection of a point of variation and the balance between the processing time and the printing speed. A larger pattern requires a longer time for the pattern matching because of a larger amount of data. Therefore, a small size is preferable from the viewpoint of the processing time. On the other hand, the degree of replacing the dots adjacent to the point of variation with the small droplets is decided according to the accuracy of the jaggy correction, i.e., the character quality. Therefore, it is necessary to deicide the most proper size in consideration of the balance between the processing speed and the character quality.

It is found, in a case where a type of ink absorbable to the recording medium is used so that a less bumpy image is formed, that adding of 4 dots or, preferably, 6 dots of the small droplets improves the character quality to a sufficiently high level with the processing speed of 10 pages per minute (ppm) or higher. In other words, the window is preferable set such that n is 3 and m is equal to or larger than 13 so that 6 dots in the main-scanning direction are detectable.

A bold/jaggy-correction process is described with reference to Figs. 36 to 42. In the bold/jaggy-correction process, the small droplets and the medium droplets are added with the number of the small droplets and the number of the medium droplets being decided, independently.

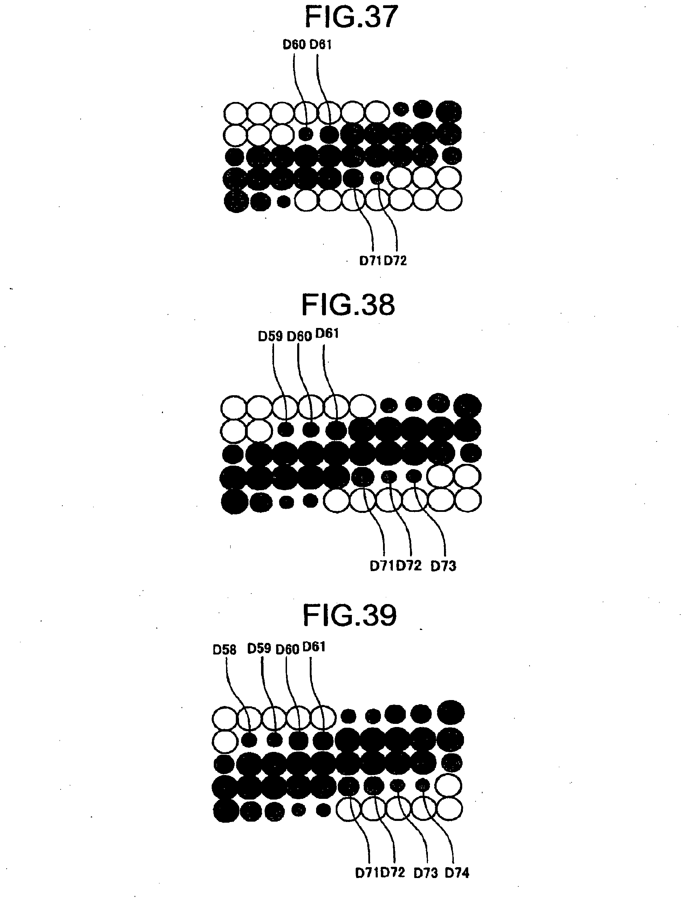

Fig. 36 is a schematic diagram of a first example, as the resultant of the bold/jaggy-correction process, added with the small droplets at pixels D61 and D71 each of which is located one dot before the point of variation. Fig. 37 is a schematic diagram of a second example added with the medium droplets at the pixels D61 and D71 each of which is located at one dot before the point of variation, and the small droplets at pixel D60 and D72 each of which is located two dots before the point of variation. Fig. 38 is a schematic diagram of a third example added with the medium droplets at the pixels D61 and D71 each of which is located one dot before the point of variation, and the small droplets at pixels D60, D59, D72, and D73 each of which is located two or three dots before the point of variation. Fig. 39 is a schematic diagram of a fourth example added with the medium droplets at the pixels D61, D60, D71, and D72 each of which is located one or two dots before the point of variation, and the small droplets at pixels D59, D58, D73, and D74 each of which is located three or four dots before the point of variation.

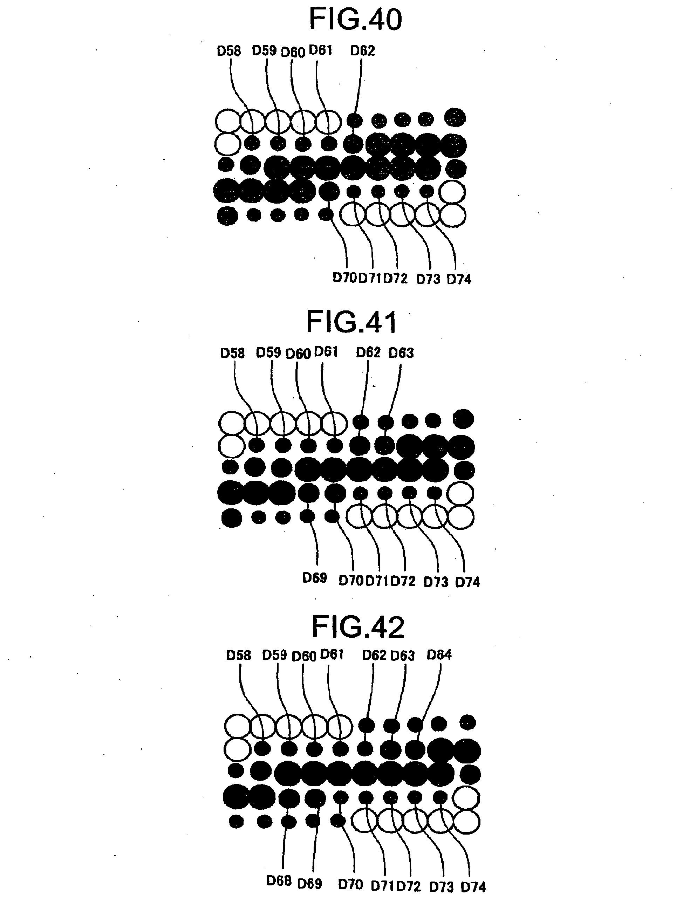

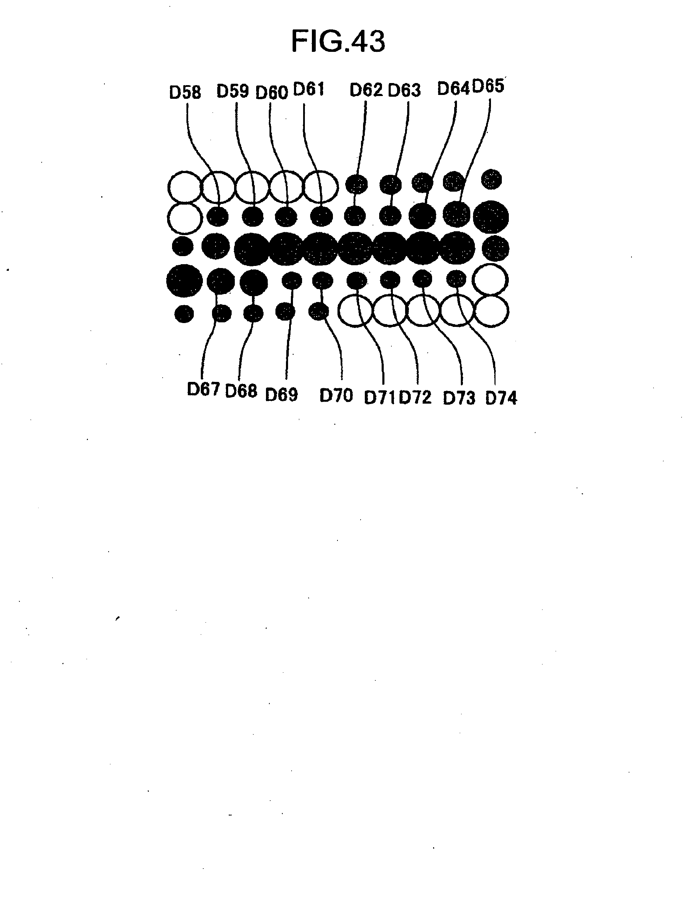

Figs. 40 to 42 are schematic diagram of a fifth example to an eighth example added with the small droplets at the pixels D61 to D58 and D71 to D74 each of which is located one to four dots before the point of variation. In the fifth example shown in Fig. 40, in addition, the pixels D62 and D70 each located in a character section one dot after the point of variation are replaced with the medium droplets. In the sixth example shown in Fig. 41, the pixels D62 and D70 each located in the character section one dot after the point of variation are replaced with the medium droplets and the pixels D63 and D69 each located in the character section two dots after the point of variation are replaced with the small droplets. In the seventh example shown in Fig. 42, the pixels D63, D64, D69, and D68 each located in the character section one or two dots after the point of variation are replaced with the medium droplets and the pixels D62 and D70 each located in the character section three dots after the point of variation are replaced with the small droplets. In the eighth example shown in Fig. 43, the pixels D64, D65, D68, and D67 each located in the character section one or two dots after the point of variation are replaced with the medium droplets and the pixels D62, D63, D70, and D69 each located in the character section three or four dots after the point of variation are replaced with the small droplets.

The obtained processing speeds are arranged in the order of the first to the eighth examples, with the processing speed in the first example shown in Fig. 36 being the highest. The first reason of this processing speed order is that the pattern matching is performed only when the focus pixel is blank data in the first example to the fourth example. On the other hand, the pattern matching is performed both when the focus pixel is blank data and when the focus pixel is an image dot in the fifth example to the eighth example, i.e., the pattern matching is performed for all pixels of the font data. In other words, the manner of adding a small droplet to only a blank pixel makes it possible to generate the jaggy-corrected font data at a high speed. It is noted that the manner of replacing only the image dot with a small droplet makes it possible to generate the jaggy-corrected font data at a high speed. However, the generated jaggy-corrected font data is not suitable for the bold process.

The second reason is in the number of the required reference patterns. The numbers of the required reference patterns are arranged in the ascendant order of the first example to the eighth example. This is because, for example, in the second example the reference pattern by comparing with which the determination of addition of the droplet at a blank pixel two dots before the point of variation is made is required in addition to the reference pattern used in the first example. In the fifth example, the reference pattern by comparing with which the determination of replacement of a pixel in the character section one dot after the point of variation with the droplet is made is required in addition to the reference patterns used in the fourth example. In the sixth embodiment, the reference pattern by comparing with which the determination of replacement of a pixel in the character section two dots after the point of variation with the droplet is made is required in addition to the reference patterns used in the fifth example. Therefore, the number of the reference patterns increases from the first example to the eighth example, and the number of the pattern matching increases as well.

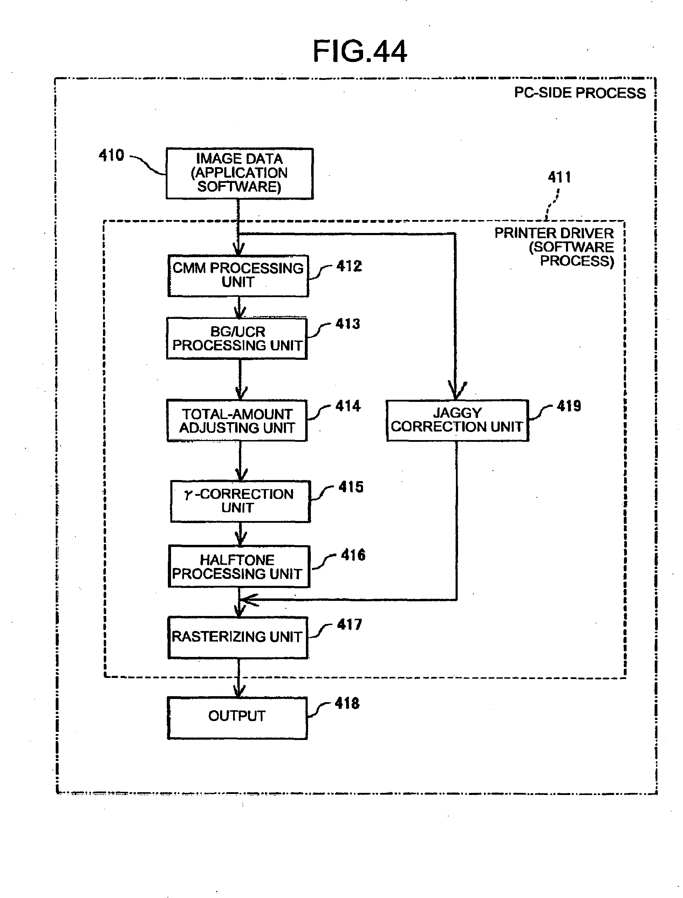

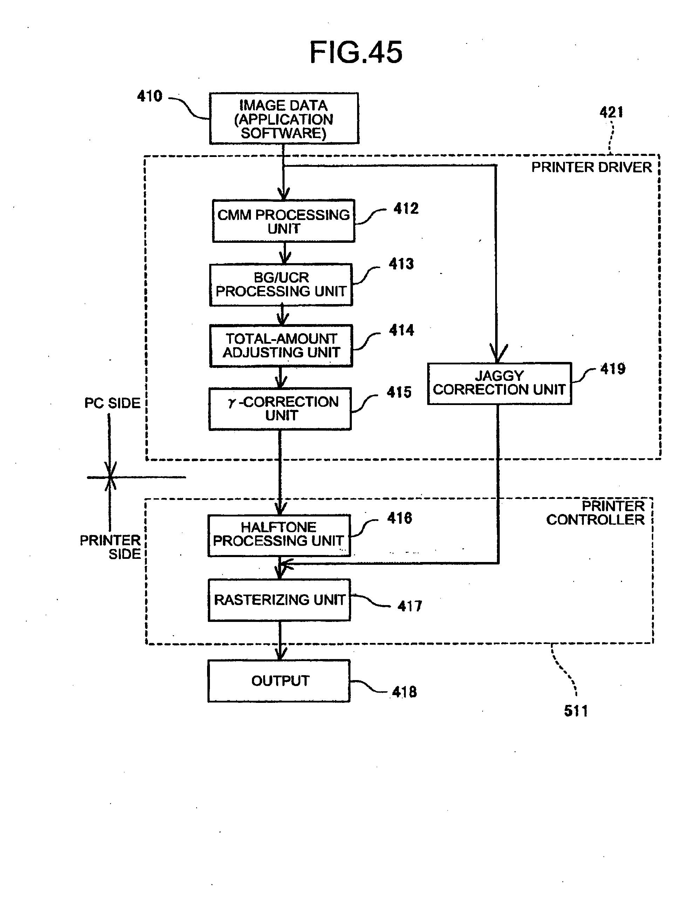

All of the jaggy correction process, the bold process, and the bold/jaggy-correction process can be performed on the image processing apparatus as the computer program (the printer driver) as shown in Fig. 44. Alternatively, only a part of the jaggy correction process is implemented by the image processing apparatus as the software processing, and the other processes are performed by the image forming apparatus as the hardware processing as shown in Fig. 45.

Storing in a recording medium the computer program that is executed by the image processing apparatus to implement the image processing method brings several advantages, for example, easy distribution or copying and, if the computer program is stored in a nonvolatile recording medium, a long storage period. Moreover, the computer program stored in the recording medium can be easily installed in most of widely-used computers through an external recording-medium reading unit, such as a floppy disk drive or a compact disk (CD)/digital versatile disk (DVD) drive, which is equipped with the computers as standard specifications or optional specifications. Alternatively, the computer program can be downloaded to the image processing apparatus and the image forming apparatus via the Internet.

Although the inkjet printer is used in the embodiment, some other image forming apparatuses such as a printer, a facsimile machine, a copier, an MFP including a printer, a facsimile machine, and a copier can be used instead of the inkjet printer. The image processing method can be used in an image processing apparatus that sends the print data (image data) to the image forming apparatus, and can be implemented as a computer program such as the printer driver.

## Claims

1. An image processing method for an image forming apparatus (500) that includes at least one recording head (7k1, 7k2, 7y, 7m, 7c) including a first nozzle line (104A, 104B) having a first resolution from which a black ink is ejected and a second nozzle line (104A, 104B) having a second resolution from which at least one color ink is ejected, the image processing method comprising:
generating image data, when an input image is black, such that the image is formed with the black ink and the color ink with a dot of the black ink and a dot of the color ink formed at a same position, wherein
the color ink includes a first color ink and a second color ink, and
the generating includes arranging dots of the first color ink and the second color ink in a halftone process using a same dither mask,
wherein
the generating includes generating the image data with the dot of the black ink and the dot of the color ink formed at the same position such that
a usage of the black ink per unit area is 40% to 100% of a reference usage of the black ink per unit area in a case of forming the image exclusively with the black ink at a same density, and
a usage of the color ink per unit area is 2% to 20% of the reference usage.

2. The image processing method according-to claim 1, wherein the first resolution is n times the second resolution, where n is an integer larger than unity.

3. The image processing method according to claim 1, wherein the generating includes generating the image data such that a total usage of the black ink and the color ink per unit area is 80% to 130% of a reference usage of the black ink per unit area in a case of forming the image exclusively with the black ink at a same density.

4. The image processing method according to claim 1, wherein the generating includes generating the image data such that a difference in image density with a case of forming the image exclusively with the black ink at a same density is within a range of +-10%.

5. The image processing method according to claim 1, wherein, the generating includes generating the image data such that the dot of the color ink is arranged on equal to or larger than 1/(2xn) of a position of the dot of the black ink at a tone equal to or higher than 90%.

6. The image processing method according to claim 1, wherein,
the color ink includes a first color ink and a second color ink, and
arrangement positions and sizes of dots of the first color ink and the second color ink are identical.

7. The image processing method according to claim 1, wherein the generating includes determining at least one of usages and dot-forming positions of the black ink and the color ink according to at least one of a printing mode, an object of the image, and a black image ratio of the image.

8. The image processing method according to claim 1, wherein the generating includes determining whether to make dot-forming positions of the black ink and the color ink at a same position according to an instruction received from outside the image forming apparatus (500).

9. The image processing method according to claim 1, wherein the generating includes determining whether to make dot-forming positions of the black ink and the color ink at a same position according to a recording mode that is set based on a type of a recording medium or a recording method.

10. The image processing method according to claim 1, wherein the generating includes, when the image includes an image of a black character to be formed with the black ink and the color ink, performing a jaggy correction to correct a step-like pattern of the image.

11. The image processing method according to claim 10, wherein the performing includes performing the jaggy correction with at least one of the black ink and the color ink.

12. A recording medium that stores therein a computer program for an image forming apparatus (500) that includes at least one recording head (7k1, 7k2, 7y, 7m, 7c) including a first nozzle line (104A, 104B) having a first resolution from which a black ink is ejected and a second nozzle line (104A, 104B) having a second resolution from which at least one color ink is ejected, the computer program causing a computer to execute:
generating image data, when an input image is black, such that the image is formed with the black ink and the color ink with a dot of the black ink and a dot of the color ink formed at a same position, wherein,
the color ink includes a first color ink and a second color ink, and
the generating includes arranging dots of the first color ink and the second color ink in a halftone process using a same dither mask,
wherein
the generating includes generating the image data with the dot of the black ink and the dot of the color ink formed at the same position such that
a usage of the black ink per unit area is 40% to 100% of a reference usage of the black ink per unit area in a case of forming the image exclusively with the black ink at a same density, and
a usage of the color ink per unit area is 2% to 20% of the reference usage.

13. An image processing apparatus (400) for an image forming apparatus (500) that includes at least one recording head (7k1, 7k2, 7y, 7m, 7c) including a first nozzle line (104A, 104B) having a first resolution from which a black ink is ejected and a second nozzle line (104A, 104B) having a second resolution from which at least one color ink is ejected, the image processing apparatus (400) comprising the recording medium according to the preceding claim.

## Patentansprüche

1. Bildverarbeitungsverfahren für eine Bilderzeugungsvorrichtung (500), die wenigstens einen eine erste Düsenzeile (104A, 104B), die eine erste Auflösung aufweist und aus der eine schwarze Tinte ausgestoßen wird, und eine zweite Düsenzeile (104A, 104B), die eine zweite Auflösung aufweist und aus der wenigstens eine Farbtinte ausgestoßen wird, enthaltenden Aufzeichnungskopf (7k1, 7k2, 7y, 7m, 7c) enthält, wobei das Bildverarbeitungsverfahren enthält:
Erzeugen von Bilddaten, wenn ein Eingabebild schwarz ist, so dass das Bild mit der schwarzen Tinte und der Farbtinte mit einem Punkt der schwarzen Tinte und einem Punkt der Farbtinte an derselben Position gebildet wird, wobei
die Farbtinte eine erste Farbtinte und eine zweite Farbtinte enthält und das Erzeugen enthält, dass Punkte der ersten Farbtinte und der zweiten Farbtinte in einem Rasterprozess unter Verwendung derselben Ditheringmaske angeordnet werden,
wobei
das Erzeugen enthält, dass die Bilddaten mit dem Punkt der schwarzen Tinte und dem an derselben Position gebildeten Punkt der Farbtinte so erzeugt werden, dass
ein Verbrauch an der schwarzen Tinte pro Einheitsfläche 40 % bis 100 % eines Referenzverbrauchs der schwarzen Tinte pro Einheitsfläche in dem Fall beträgt, dass das Bild ausschließlich aus der schwarzen Tinte bei einer gleichen Dichte gebildet wird, und
ein Verbrauch an der Farbtinte 2 % bis 20 % des Referenzverbrauchs beträgt.

2. Bildverarbeitungsverfahren gemäß Anspruch 1, bei dem die erste Auflösung n-mal die zweite Auflösung beträgt, wobei n eine ganze Zahl ist, die größer als das Einselement bzw. eins ist.

3. Bildverarbeitungsverfahren gemäß Anspruch 1, bei dem das Erzeugen enthält, dass die Bilddaten so erzeugt werden, dass ein gesamter Verbrauch an der schwarzen Tinte und der Farbtinte pro Einheitsfläche 80 % bis 130 % eines Referenzverbrauchs der schwarzen Tinte pro Einheitsfläche in dem Fall beträgt, dass das Bild ausschließlich auf der schwarzen Tinte bei einer gleichen Dichte gebildet wird.

4. Bildverarbeitungsverfahren gemäß Anspruch 1, bei dem das Erzeugen enthält, dass die Bilddaten so erzeugt werden, dass ein Unterschied in der Bilddichte gemessen an einem Fall, in dem das Bild ausschließlich mit der schwarzen Tinte bei einer gleichen Dichte gebildet wird, in einem Bereich von +- 10 % liegt.

5. Bildverarbeitungsverfahren gemäß Anspruch 1, bei dem das Erzeugen enthält, dass die Bilddaten so erzeugt werden, dass der Punkt der Farbtinte größer oder gleich als 1/(2xn) einer Position des Tropfens der schwarzen Tinte bei einem Farbton von größer oder gleich 90 % angeordnet wird.

6. Bildverarbeitungsverfahren gemäß Anspruch 1, bei dem
die Farbtinte eine erste Farbtinte und eine zweite Farbtinte enthält und Anordnungspositionen und Größen von Punkten der ersten Farbtinte und der zweiten Farbtinte identisch sind.

7. Bildverarbeitungsverfahren gemäß Anspruch 1, bei dem das Erzeugen enthält, dass wenigstens eines von Verbrauch und Punktbildungspositionen der schwarzen Tinte und der Farbtinte gemäß wenigstens einem aus einem Druckmodus, einem Objekt des Bilds und einem Schwarzbildverhältnis des Bilds bestimmt wird.

8. Bildverarbeitungsverfahren gemäß Anspruch 1, bei dem das Erzeugen enthält, dass bestimmt wird, ob Punktbildungspositionen der schwarzen Tinte und der Farbtinte an einer selben Position gemäß einer von außerhalb des Bilderzeugungsvorrichtung (500) empfangenen Anweisung erzeugt werden sollen.

9. Bildverarbeitungsverfahren gemäß Anspruch 1, bei dem das Erzeugen enthält, dass bestimmt wird, ob Punktbildungspositionen der schwarzen Tinte und der Farbtinte an einer selben Position gemäß einem Aufzeichnungsmodus, der basierend auf einem Typ eines Aufzeichnungsmediums oder eines Aufzeichnungsverfahrens eingestellt wird, erzeugt werden sollen.

10. Bildverarbeitungsverfahren gemäß Anspruch 1, bei dem das Erzeugen enthält, dass eine Lückenkorrektur zum Korrigieren eines Stufenmusters des Bilds ausgeführt wird, wenn das Bild ein Bild eines mit der schwarzen Tinte und der Farbtinte zu bildenden schwarzen Zeichens enthält.

11. Bildverarbeitungsverfahren gemäß Anspruch 10, bei dem das Ausführen enthält, dass die Lückenkorrektur mit wenigstens einer von der schwarzen Tinte und der Farbtinte ausgeführt wird.

12. Aufzeichnungsmedium, auf dem ein Computerprogramm für eine Bilderzeugungsvorrichtung (500) gespeichert ist, die wenigstens einen eine erste Düsenzeile (104A, 104B), die eine erste Auflösung aufweist und aus der eine schwarze Tinte ausgestoßen wird, und eine zweite Düsenzeile (104A, 104B), die eine zweite Auflösung aufweist und aus der wenigstens eine Farbtinte ausgestoßen wird, enthaltenden Aufzeichnungskopf (7k1, 7k2, 7y, 7m, 7c) enthält, wobei das Computerprogramm einen Computer dazu veranlasst, Folgendes auszuführen:
Erzeugen von Bilddaten, wenn ein Eingabebild schwarz ist, so dass das Bild mit der schwarzen Tinte und der Farbtinte mit einem Punkt der schwarzen Tinte und einem Punkt der Farbtinte an derselben Position gebildet wird, wobei
die Farbtinte eine erste Farbtinte und eine zweite Farbtinte enthält und das Erzeugen enthält, dass Punkte der ersten Farbtinte und der zweiten Farbtinte in einem Rasterprozess unter Verwendung derselben Ditheringmaske angeordnet werden,
wobei
das Erzeugen enthält, dass die Bilddaten mit dem Punkt der schwarzen Tinte und dem an derselben Position gebildeten Punkt der Farbtinte so erzeugt werden, dass
ein Verbrauch an der schwarzen Tinte pro Einheitsfläche 40 % bis 100 % eines Referenzverbrauchs der schwarzen Tinte pro Einheitsfläche in dem Fall beträgt, dass das Bild ausschließlich aus der schwarzen Tinte bei einer gleichen Dichte gebildet wird, und
ein Verbrauch an der Farbtinte 2 % bis 20 % des Referenzverbrauchs beträgt.

13. Bildverarbeitungsvorrichtung (400) für eine Bilderzeugungsvorrichtung (500), die wenigstens einen eine erste Düsenzeile (104A, 104B), die eine erste Auflösung aufweist und aus der eine schwarze Tinte ausgestoßen wird, und eine zweite Düsenzeile (104A, 104B), die eine zweite Auflösung aufweist und aus der wenigstens eine Farbtinte ausgestoßen wird, enthaltenden Aufzeichnungskopf (7k1, 7k2, 7y, 7m, 7c) enthält, wobei die Bildverarbeitungsvorrichtung (400) das Aufzeichnungsmedium gemäß dem vorhergehenden Anspruch enthält.

## Revendications

1. Procédé de traitement d'image pour un appareil de formation d'image (500) qui comprend au moins une tête d'enregistrement (7k1, 7k2, 7y, 7m, 7c) comprenant une première ligne de buses (104A, 104B) ayant une première résolution à partir desquelles une encre noire est éjectée et une deuxième ligne de buses (104A, 104B) ayant une deuxième résolution à partir desquelles au moins une encre de couleur est éjectée, le procédé de traitement d'image comprenant :
la génération de données d'image, lorsqu'une image d'entrée est noire, de sorte que l'image soit formée par l'encre noire et l'encre de couleur, un point de l'encre noire et un point de l'encre de couleur étant formés à une même position, dans lequel
l'encre de couleur comprend une première encre de couleur et une deuxième encre de couleur, et
la génération comprend l'agencement des points de la première encre de couleur et de la deuxième encre de couleur dans un processus en demi-teintes en utilisant un même masque de tramage,
dans lequel
la génération comprend la génération des données d'image, le point de l'encre noire et le point de l'encre de couleur étant formés à la même position de sorte que
une utilisation de l'encre noire par aire unitaire soit de 40 % à 100 % d'une utilisation de référence de l'encre noire par aire unitaire dans un cas de formation de l'image exclusivement avec l'encre noire à une même densité, et
une utilisation de l'encre de couleur par aire unitaire soit de 2 % à 20 % de l'utilisation de référence.

2. Procédé de traitement d'image selon la revendication 1, dans lequel la première résolution est n fois supérieure à la deuxième résolution, où n est un entier supérieur à l'unité.

3. Procédé de traitement d'image selon la revendication 1, dans lequel la génération comprend la génération des données d'image de sorte qu'une utilisation totale de l'encre noire et de l'encre de couleur par aire unitaire soit de 80 % à 130 % d'une utilisation de référence de l'encre noire par aire unitaire dans un cas de formation de l'image exclusivement avec l'encre noire à une même densité.

4. Procédé de traitement d'image selon la revendication 1, dans lequel la génération comprend la génération des données d'image de sorte qu'une différence de densité d'image avec un cas de formation de l'image exclusivement avec l'encre noire à une même densité soit dans une plage de +/-10 %.

5. Procédé de traitement d'image selon la revendication 1, dans lequel la génération comprend la génération des données d'image de sorte que le point de l'encre de couleur soit agencé sur une position supérieure ou égale à 1/(2xn) d'une position du point de l'encre noire avec une teinte supérieure ou égale à 90 %.

6. Procédé de traitement d'image selon la revendication 1, dans lequel
l'encre de couleur comprend une première encre de couleur et une deuxième encre de couleur, et
les positions et les tailles d'agencement des points de la première encre de couleur et de la deuxième encre de couleur sont identiques.

7. Procédé de traitement d'image selon la revendication 1, dans lequel la génération comprend la détermination d'au moins l'une des utilisations et des positions de formation de points de l'encre noire et de l'encre de couleur conformément à au moins l'un d'un mode d'impression, d'un objet de l'image et d'un pourcentage d'image noire de l'image.

8. Procédé de traitement d'image selon la revendication 1, dans lequel la génération comprend la détermination s'il convient de faire en sorte que les positions de formation des points de l'encre noire et de l'encre de couleur soient les mêmes conformément à une instruction reçue de l'extérieur de l'appareil de formation d'image (500).

9. Procédé de traitement d'image selon la revendication 1, dans lequel la génération comprend la détermination s'il convient de faire en sorte que les positions de formation des points de l'encre noire et de l'encre de couleur soient les mêmes conformément à un mode d'enregistrement qui est fixé sur la base d'un type d'un support d'enregistrement ou d'un procédé d'enregistrement.

10. Procédé de traitement d'image selon la revendication 1, dans lequel la génération comprend, lorsque l'image comprend une image d'un caractère noir à former par l'encre noire et l'encre de couleur, l'exécution d'une correction d'irrégularité pour corriger un motif en escalier de l'image.

11. Procédé de traitement d'image selon la revendication 10, dans lequel l'exécution comprend l'exécution de la correction d'irrégularité avec au moins l'une de l'encre noire et de l'encre de couleur.

12. Support d'enregistrement qui mémorise dans celui-ci un programme d'ordinateur pour un appareil de formation d'image (500) qui comprend au moins une tête d'enregistrement (7k1, 7k2, 7y, 7m, 7c) comprenant une première ligne de buses (104A, 104B) ayant une première résolution à partir desquelles une encre noire est éjectée et une deuxième ligne de buses (104A, 104B) ayant une deuxième résolution à partir desquelles au moins une encre de couleur est éjectée, le programme d'ordinateur amenant un ordinateur à effectuer :
la génération de données d'image, lorsqu'une image d'entrée est noire, de sorte que l'image soit formée par l'encre noire et l'encre de couleur, un point de l'encre noire et un point de l'encre de couleur étant formés à une même position, dans lequel,
l'encre de couleur comprend une première encre de couleur et une deuxième encre de couleur, et
la génération comprend l'agencement des points de la première encre de couleur et de la deuxième encre de couleur dans un processus en demi-teintes en utilisant un même masque de tramage,
dans lequel
la génération comprend la génération des données d'image, le point de l'encre noire et le point de l'encre de couleur étant formés à la même position de sorte
qu'une utilisation de l'encre noire par aire unitaire soit de 40 % à 100 % d'une utilisation de référence de l'encre noire par aire unitaire dans un cas de formation de l'image exclusivement avec l'encre noire à une même densité, et
qu'une utilisation de l'encre de couleur par aire unitaire soit de 2 % à 20 % de l'utilisation de référence.

13. Appareil de traitement d'image (400) pour un appareil de formation d'image (500) qui comprend au moins une tête d'enregistrement (7k1, 7k2, 7y, 7m, 7c) comprenant une première ligne de buses (104A, 104B) ayant une première résolution à partir desquelles une encre noire est éjectée et une deuxième ligne de buses (104A, 104B) ayant une deuxième résolution à partir desquelles au moins une encre de couleur est éjectée, l'appareil de traitement d'image (400) comprenant le support d'enregistrement selon la revendication précédente.
